# EUROPEAN PATENT APPLICATION

(11) **EP 4 462 209 A1**
(43) Date of publication of application: **13.11.2024**
(21) Application number: 23172576.3
(22) Date of filing: 10.05.2023
(51) Int. Cl.: G05B 19/418, G05B 19/042

(54) **PROCESS AUTOMATION SYSTEM WITH SECURITY INTERFACE**

(71) Applicant: BASF SE, 67056 Ludwigshafen am Rhein (DE)
(72) Inventor: HARTMANN, Michael, 49448 Lemfoerde (DE); RUDOLPH, Hans, 49448 Lemfoerde (DE); HOPPE, Henry, 67061 Ludwigshafen am Rhein (DE); WINKLER, Christian-Andreas, 67056 Ludwigshafen am Rhein (DE)
(74) Representative: BASF IP Association

(57) **Abstract**

The invention relates to a system (100, 200, 300, 500) for process automation of a manufacturing plant, comprising:
- a plurality of machines (140, 536) of the manufacturing plant,
- a plant machinery database (128, 548) comprising control parameters for the machines;
- an automation system (103) for automatically operating the machines of the manufacturing plant in accordance with the control parameters in the plant machinery database;
- a security interface (142) configured for:
∘ receiving a request,
∘ verifying the request,
∘ in response to determining that the request is valid, storing control parameters (402-408) comprised in or derived from the request in the plant machinery database;
wherein the automation system is configured to perform the automatic operation of the machines in accordance with the stored control parameters comprised in or derived from the valid request.

## Description

### Field of the invention

The invention relates to industrial automation systems and in particular to systems and methods for controlling automated manufacturing processes safely.

### Background and related art

So far, remote plant control was basically prohibited due to the potential risk to proper plant automation. Tasks to be performed "inside" and "outside" of a factory were de-coupled by mandated manual activities.

The automation structure described e.g. by the Purdue Reference Model, and in particular the automation structure used in legacy automation systems have been used for many years and have been shown to operate reliability. However, the systems lack openness and flexibility - new technologies (loT, mobile devices, cloud computing, remote control, VR and AR applications etc.) are hard/impossible to integrate, and costs are high.

The integration of existing, hardware-based automation technologies into globally networked systems has proven to be particularly problematic. Trained specialists implement a large number of settings on the machines on site. If the settings are set incorrectly, either intentionally or by mistake, this can lead to the production of products of inferior quality, to damage to individual machines, entire production plants or even to the employees.

In order to prevent incorrect operation of a plant caused by external systems, users and/or targeted hacker attacks, the execution of remote-control commands has been forbidden or considerably complicated by security measures in these systems. Consequently, these automation systems could not be fully integrated into larger, global IT systems.

### Summary

It is an objective of the present invention to provide for an improved system for process automation of a manufacturing plant and a corresponding method as specified in the independent claims. Embodiments of the invention are given in the dependent claims. Embodiments of the present invention can be freely combined with each other if they are not mutually exclusive.

In one aspect, the invention relates to a system for process automation of a manufacturing plant. The system comprises:
- a plurality of machines of the manufacturing plant,
- a plant machinery database comprising control parameters for the machines;
- an automation system for automatically operating the machines of the manufacturing plant in accordance with the control parameters in the plant machinery database; and
- a security interface

The security interface is configured for: receiving a request; verifying the request; and in response to determining that the request is valid, storing control parameters comprised in or derived from the request in the plant machinery database. The automation system is configured to perform the automatic operation of the machines in accordance with the stored control parameters comprised in or derived from the valid request.

For example, the request can be a request to start, stop or modify the operation of one or more of the machines. The request may be received from a client via a network, e.g., the internet.

Embodiments of the invention may offer a possibility for existing as well as for new plants to efficiently link an existing core automation system with advanced IT-systems for monitoring, optimization and controlling tasks whereby client devices or users are enabled to send requests via a network to the security interface for operating one or more machines of a plant after a successful request verification.

According to embodiments, the security interface is unidirectional, meaning it allows machine-related data, e. g. machine-related control parameters, to be transmitted from a client via the request to the automation system, but does not allow machine related data to be returned to the client having submitted the request. This may increase security, because the client will not receive any information about the type or state of the machine whose state of operation was modified in response to the request. The client will also not receive any information on the number of machines affected by the request, or any reasons why a request could not be executed. According to some embodiments, the unidirectional security interface does not return any request-related feedback information to the client except from the information if the request was executed successfully or not.

According to embodiments, the verification of the request comprises checking if the control parameters comprised in or derived from the request are plausible. Only if this plausibility check returns that the request is plausible, the request is treated as a verified, valid request.

For example, the plausibility check may comprise checking if operation of one or more of the machines in accordance with the control parameters will be save (for the product to be produce, for the machines and the staff) and will likely allow to produce a product having desired properties. For example, the plausibility check may comprise determining if the control parameter value specified in or derived from the request is within a predefined allowed parameter value range and/or predicting (e.g. simulating) if a process executed by one of the machines in accordance with this control parameter would yield a product having a product property, e.g. a product size, amount, purity, shape, color, elasticity, viscosity, etc., which is in an allowed or preferred parameter value range. If the control parameter would set the temperature of a heating element of a tank to a temperature which would damage the material of the tank or its ingredients, the security interface may consider the request to be implausible.

Only if this check returns that the request is a valid request, the security interface will store the control parameters in the plant machinery database, thereby modifying the way the machines will operate.

According to embodiments, the plant machinery database comprises control parameters of one or more of the machines, wherein the control parameters are or comprise control parameters, and the automation system automatically operates the machines by setting the control parameters in the plant machinery database to a control parameter value provided with or derived from the request.

According to embodiments, the plant machinery database comprises models (e.g. a structural model, e.g. a simplified or realistic 3D model), position information and status information of the machines and/or of products produced by the machines, wherein the position information is continuously updated to reflect the real positions and status of the machines and/or products. The models, position information and/or status information or parts thereof may be used for generating digital twins of the machines and/or objects manufactured or processed by the machines. For example, the digital twin of a respective one of the machines can be used for graphically representing the machine via its digital twin and/or for simulating the operation of a machine and/or for controlling the machine via its digital twin.

According to a further advantageous aspect, the security interface may act as a secure and controlled access interface which supports request-based data ingestion to the automation system from the outside without compromising integrity and plant safety.

According to embodiments, the system is used for controlling the operation of one or more of the machines of the automation system based on control parameters generated outside the automation system, e.g. generated by or entered in a client device having generated the request. These control parameters can be set points, i.e., parameters which can be set before and/or during operation of a machine and which define how the machine operates.

Embodiments of the invention may have the advantage that a remote process control of the machines of the automation system is enabled without compromising safety and which allows for a much faster and more fine-grained process control: Generally, in process industry, a local plant operator operating in spatial proximity of the machines sets the control parameter values for the one or more machines in the automation system. For example, in conventional process automation systems, he or she may enter control parameters via a local machine interface. The entered control parameters may have been suggested by a customer or another human or non-human user who is not part of the automation system (and hence is considered less trust-worthy as the local operator). By manually entering the control parameters suggested by the remote Advanced Process Control System, the local operator ensures that only proved external data is taken over in the automation system. However, the number of control parameters a human operator can understand and manually enter is limited, and in particular for complex manufacturing processes with multiple interdependencies, even a skilled local user may fail to consider relevant context information.

To the contrary, embodiments of the invention may allow clients outside of the automation system, e.g. clients hosting an Advanced Process Control System or another client software which is not part of the automation system, to generate and submit a request which comprises control data, whereby the verification of the request ensures that the control parameters do not damage the machines, reduce product quality and/or harm a human being working next to a respective machine. Moreover, request verification implemented according to embodiments of the invention allows for a much higher complexity of the plausibility checks of the control parameters and allows for processing and evaluation of requests with high frequency, thereby providing a much more fine-grained control of the automation process.

According to some examples, the system comprises a client configured to generate the request and submit it to the security interface, e.g. via a network such as the Internet.

According to embodiments, the client having generated the request is configured to generate and submit requests repeatedly, in particular at a frequency of at least once per hour, preferably at least once in a minute, preferably at least once in a second, and in some embodiments at least once in 0.10 seconds. Each of the requests comprises one or more control parameters for controlling the operation of one or more of the machines.

According to embodiments, the requests are generated and submitted automatically by a client software, whereby the control parameters specified in the request are also computed dynamically by the client software.

According to embodiments, the verification of the request is performed by the security interface repeatedly, it particular at a frequency of at least once per hour, preferably at least once in a minute, preferably at least once in a second, and in some embodiments at least once in 0.10 seconds.

The client may be configure to repeatedly predict one or more control parameter values which are optimal for or suitable for controlling the operation of one or more of the machines such that at least one feature of an automated production process performed by one or more of the machines is optimized, and to automatically and repeatedly submit a request comprising the one or more predicted control parameters to the security interface, wherein in particular the prediction of the control parameter values comprises simulating the automated production process and the operation of the one or more of the machines involved in the same.

For example, the client software may be configured to simulate the production process or parts thereof and to identify control parameters suited for optimizing the production process or for ensuring safety or a good product quality. For example, possible optimization criteria can be the reduction of energy or material consumption, the reduction of waste, the increase of product quality or purity, the presence of a desirable feature or a product property or process parameter value being in a desirable value range.

To give a concrete example, manufacturing plant PA may comprise a plurality of machines and tanks configured to perform a continuous chemical synthesis workflow for continuously generating two products A, B whose relative share may strongly depend on a process parameter like the temperature in the reaction mixture. The product A may be used as educt in a different synthesis workflow for synthesizing substance E in a different plant PE. The product B may be used as educt in a further synthesis workflow for producing substance F in a further plant PF. The demand for either A or B may depend on the demand for the substances E and F. As these products are synthesized in different plants, the machines of the plants PA, PE and PF were not part of the same automation system, so an automated integration of the synthesis workflows conducted in different plants was hitherto not feasible. A fine-grained control was also not feasible because a human operator had to manually set the reaction temperature of the synthesis workflow in plant PA to a temperature value suited for generating a share of the products A, B that met the demand for final products E and F. This was associated with a great delay and prevented a real-time synchronization of industrial manufacturing processes across distributed plants. By using a security interface and the request validation, it is possible to synchronize manufacturing processes such that latency times are minimized. Requests may be generated automatically and highly frequently by a client comprises or belongs to an Advanced Process Control System which integrates requirements, demands and available resources of multiple, heterogeneous, distributed plants.

Embodiments may hence support a completely automized control of one or more plants and the integration of process control of one or more plants in an Advanced Process Control System. Latency times may be tremendously reduced without compromising safety.

According to embodiments, the system is configured to use the security interface as the single point entry into the automation system. The security interface can be configured to receive and verify requests submitted by one or more different clients, e.g. by an Advanced Process Control System, by an edge computer system or by a remote operator using virtual reality glasses and/or mobile devices (e.g. smartphones) for controlling the manufacturing process remotely.

According to embodiments, the system for process automation comprises a multi-level system architecture. The multi-level system architecture comprises at least:
- a first level comprising the one or more machines and optionally further objects involved in executing actual physical processes, in particular sensing and manipulating physical objects during an automated production workflow;
- a second level - L2 - comprising components for supervising, monitoring and/or controlling the physical processes of the first level; The process control level comprises devices that control the overall processes within an automation system; and
- a third level - L3 - comprising manufacturing operations system components configured for managing production workflow to produce the desired products by supervising, monitoring and/or controlling components of the second level. The L3 level is also referred to as operations control level supporting management of production workflows such as e.g. manufacturing operations management systems.

The first sub-module of the security interface is part of the third level (L3). The second sub-module of the security interface is part of the second level (L2): The components of the second level are protected from components of the third and higher levels by at least one security means, in particular firewalls.

For example, the multi-level system architecture of the system for process automation can be implemented in accordance with a typical automation pyramid model, e.g. of the Purdue Reference Model or of other, similar automation pyramid models.

According to some examples, the security interface can comprise one or more software programs and/or software services acting as an interface between the automation system (and hence also the automation system level - "levels L2" of an automation system pyramid) and the components of the L3 level of an automation system pyramid structure. Embodiments of the invention allow it to implement the security interface on top of an existing automation system, thereby enabling request-based (and optionally remote) control of the automation system preferably without having to adapt the existing automation system. The request is checked and verified and only control parameters of valid requests are forwarded to and stored in the plant machinery database of the automation system. This will protect the automation system and the manufacturing plant from hackers and from requests to set critical control parameters to a value which might have negative or even detrimental consequences for the machines of the plant or for the whole manufacturing plant.

For example, the request can be a request generated by a remote client, whereby the request was transferred via a network such as the Internet to the system according to embodiments of the invention. The security interface may receive the request via one or more intermediate interfaces or modules, e.g. a service interface. In some embodiments, the request is a request to control the operation of one or more of the machines, e.g. by setting one or more control parameters of the machines, generated by remote user via a meta world engine.

According to embodiments, the security interface is configured to enable a secure, uni-directional transfer of at least the control parameters to the automation system via a control communication channel and is configured not to transfer any machine-related control parameters or status information back to a client having submitted the request.

The first and second sub-modules of the security interface (which may belong to the L3 and the L2 layers respectively) respectively may comprise functions which functionally complement each other and which have similar or identical structures (similar or identical number and type of input and output arguments).

According to embodiments, the request received by the security interface may be or comprise a call to one or more of the functions.

According to some examples, the second sub-module of the security interface comprises machine-specific functions respectively configured to control the operation of one or more of the machines in accordance with one or more of the control parameters in the plant machinery database. The number and type of input arguments and the number and type of output control commands of the one or more machine-specific functions at least partially corresponds to control interfaces of the machines controlled by respective ones of the machine-specific functions. For example the structure of the one or more machine-specific functions is at least partially identical to respective functions of the control interface of the machines.

The first sub-module of the security interface comprises one or more generic functions. Each generic function is assigned to a respective one of the machine-specific functions. The receiving of the request by the first sub-module of the interface triggers execution of at least one of the generic functions and, after successful execution of the at least one generic function, triggers execution of the one or more of the machine-specific functions assigned to the executed at least one generic function. For example the structure of the one or more generic functions is at least partially identical to the machine-specific functions being called by the respective generic function.

A "generic function" as used herein is a function which does not comprise or rely on knowledge of technical features of the machines such as manufacturer, type, current status, orientation of the machine, etc. For example, the generic function "operate a centrifuge (INT rotations-per-minute, FLOAT temperature) may be a generic function expecting the control parameters "rotations per minute" and "temperature (of the centrifuge)" as input parameters. While the generic function may not comprise a reference to any particular type of centrifuge, a call of this generic function may trigger the execution of rules which check if the specified rotations per minute and the specified temperature value are plausible without relying on specific properties of specific centrifuges. For example, if the temperature is above the boiling point of the liquid to be centrifuged, the temperature can be considered implausible without taking into account any details of the centrifuges to be used. If the plausibility checks triggered by the execution of the generic function "operate a centrifuge" returns that the arguments are plausible, a machine-specific function having the same structure may be called. The machine-specific function may comprise or be configured to read machine-specific properties, e.g. the maximum number of rotations per minute and the highest (or lowest) temperature supported by the centrifuge to be operated, an the execution of the machine-specific function may involve performing a plausibility check if the control parameters provided as arguments are supported by the specific centrifuge. The machine-specific function may have the same structure as the calling generic function, e.g. "operate a centrifuge (INT rotations-per-minute, FLOAT temperature)".

According to a further example, the request may comprise a control parameter indicating that a reaction mixture of a chemical reaction should be set to 120°C in order to trigger the generation of a desired substance. The receipt of this request by the first sub-module of the security interface may trigger the execution of a first, generic function which implements the plausibility check if the current energy price is below a predefined threshold. If so, the first, generic function returns as result that heating the reaction mixture to 120°C is valid and should be allowed. As a consequence of the successful plausibility test executed by the first generic function, the first sub-module causes the second sub-module of the security interface to trigger the execution of a first machine-specific function to which the first generic function is assigned. The first machine-specific function checks if the reaction tank comprising the reaction mixture allows performing a chemical reaction at this temperature. For example, this check may comprise checking if the material of the tank is robust enough and the heating elements are strong enough to support a temperature of 120°C. If so, the second-sub-module of the security interface will cause the heating element of the tank to heat the reaction mixture to 120°C. In case the first, generic function returns that the current energy price is above the predefined threshold, the first sub-module may return, via the feedback channel, that the request cannot be executed and the execution of the first machine-specific function is not triggered.

According to some examples, a first part of the request verification is executed by the at least one generic function, and a second part of the request verification is performed by one or more of the machine-specific functions assigned to the executed at least one generic function.

This may have the advantage of allowing to perform plausibility checks both with respect to criteria which can be evaluated in the L3 level and with respect to criteria which relate to more sensitive, machine-related criteria which may relate to sensitive machine parameters and status information which should not be disclosed for security reasons. A further advantage may be that the two-step implementation of the request verification reduces CPU and memory consumption as the machine-specific functions are executed only if the associated first functions have returned that the request is valid. Hence, the generic functions and machine-specific functions assigned to each other functionally complement one another as to provide a function, in particular a plausibility check function, which covers both L3 and L2 aspects of the automation system.

According to some examples, the system comprises a function-synchronization module configured to: automatically determine that the number or type of input arguments required by one of the machine-specific functions or that the number or type of output arguments provided by the one of the machine-specific functions changed, and automatically replicating the change to the one of the generic functions to which the changed machine-specific function is assigned such that the input arguments and the output arguments of the generic function also reflect this change.

This may have the advantage that the implementation of the request verification is transparent. The functions calls to the machines and/or to components of the L2 level of the system for process automation as implemented by the machine-specific functions are represented and "visible" to the client or the service interface via structurally identical generic functions. Hence, the structure (type and number of the input and/or output arguments and/or function name) of the generic functions exposed to the client or the service interface are identical to the structure of the machine-specific functions. Implementing the request verification by two different sub-modules using generic and machine-specific functions as specified above decouples the machines and components of the L2 automation level from components of the L3 level and systems outside the plant, thereby ensuring that inbound requests are only forwarded if the request has been verified successfully as plausible (and, preferably, if the requesting client was able to successfully authenticate at an ID-Provide module).

In a further beneficial aspect, any amendment of the structure of a machine-specific function which may be necessary to adapt the system when a machine was replaced by a different version of the machine is automatically propagated to the generic function. This may ensure that the function interfaces are kept in sync automatically and errors doe to incompatible function calls are avoided.

Optionally, the security interface may be configured to receive feedback data from the automation system via a feedback communication channel which is a communication channel separate from the control channel.

For example, the security interface may completely lack any option to receive data from the automation system and/or to forward this data to the client.

In some embodiments, there may be a separate communication channel referred to as feedback channel for transmitting feedback information being indicative of whether a request was executed or refused to be executed.

For example, the feedback information may be communicated from the machines via a database service interface (between the security interface and the plant machinery database) to a service interface which forwards the feedback data to the client having submitted the request. In addition, the security module may comprise an interface for receiving feedback information from the automation system and/or may use the feedback channel to inform the client if the request was successfully verified and execute or not.

Preferably, the feedback channel used for transporting feedback data from the automation system or the security interface to the client is technically separated from the unidirectional control channel for forwarding the control parameters of the request from the client/service interface to the automation system via the security interface.

This may have the advantage that even in case the feedback channel should become compromised by malware or a hacker, the communication channel provided by the security interface for processing and forwarding the control parameters of the request is not affected. Hence, using separate communication channels for the feedback data and for the request-based control parameters (acting as control data) may ensure that the - typically non-critical - feedback data can easily be distributed via the feedback channel to one or more recipients. The feedback channel may be a communication link having a lower degree of data security and data integrity than the communication channel provided by the security interface for the control parameters. This may ease the propagation of feedback data while still maintaining a highly secure communication channel for the configuration data. For example, the different channels may use different encryption techniques for ensuring integrity of the data transported via the respective channel.

According to embodiments, the verification of the request is performed by the security interface repeatedly. In particular, the verification can be performed at a frequency of at least once per hour, or at least once in a minute, preferably at least once in a second, and in some embodiments at least once in 0.10 seconds.

This may be beneficial as this may allow the security interface to provide a fine-granular control of the manufacturing process which is able to adapt very quickly to changed requirements and/or changed production targets. For example, the verification may comprise testing if one or more control parameters provided by a request received at 12:00 are still plausible given some environmental parameters at 12:05, at 12:10, ...., at 13:05, 13:10, and so on. For example, the manufacturing plant may control a chemical reaction where a particular chemical substance is produced in a reaction that may take place in a temperature range of preferably 30°C to 60°C, whereby the purity of the product decreases with temperature. The purity of the product is continuously monitored. A request received at 14:00 may indicate that this chemical reaction should be executed at 45°C rather than 40% to increase the speed of the manufacturing process, while a further control parameter in this request may specify that the purity of the product should be at least 80%. The service interface may evaluate at 14:00 upon receiving the request if the desired purity is achievable in the ongoing with a reaction temperature of 45°C and if so, may increase the temperature accordingly. For example, after the successful completion of this plausibility check, the new reaction temperature of 45°C may be stored in the plant machinery database and used by a heating element of a reaction vessel to heat the reaction mixture to the indicated temperature. For various reasons, the purity of the ongoing reaction may have deteriorated significantly till 14:35. This may be measured by a sensor device in the reaction vessel and may be communicated via a feedback channel to the security interface. When the security interface repeats the verification of the request (which was received at 14:00) at 14:35, the security interface may determine that the desired and currently set temperature of 45°C will likely not be able to provide a product with a purity of at least 80% given the currently measured purity data. In this case, the security interface may autonomously modify the control parameter provided in the request, e.g. reduce the temperature from 45°C to 40°C and store the new temperature instead of the old one in the plant machinery database. In addition, or alternatively, the security interface may issue a message and return it to the entity having submitted the request. The message may comprise a notification that the requested temperature value is no longer valid and has been replace by a different temperature value which is better suited to achieve an optimization target, e.g. the product purity. In other embodiments, the notification may merely comprise an indication that the request is refused or no longer determines the value of the respective control parameter in the plant machinery database.

It should be noted that it is not feasible for a human operator to perform a continuous checking multiple times per minute or even per second if some requested control parameters are still valid/acceptable with regard to process security, product quality, costs or other optimization criteria. Hence, embodiments of the invention may allow the automation system to react immediately to changed production conditions and changed requirement, whereby the reaction speed is faster and more accurate than in automation systems relying on additional manual quality tests of a production process.

According to another embodiment, the security interface is configured to count the number of requests received in a predefined time interval, e.g. within an hour or within some minutes or seconds. If the number of requests to change a given control parameter exceeds a predefined maximum request number threshold, any further request to change this control parameter may be refused, at least until a predefined time has lapsed. This may provide protection against denial of service attacks and may in addition protect the machines from wear and tear, because some parameter value changes may trigger the movement of a mechanical part of a machine and it may therefore be preferable to limit the number of movements of machine parts to a maximum value.

According to embodiments, the automation system comprises a programmable logic controller (PLC) configured to control one or more manufacturing processes executed by the machines of the plant.

The PLC can be, for example, an industrial computer that has been ruggedized and adapted for the control of manufacturing processes, such as assembly lines, machines, robotic devices, or any activity that requires high reliability, ease of programming, and process fault diagnosis.

A PLC works in a program scan cycle, where it executes its program repeatedly. The simplest scan cycle consists of 3 steps: read inputs, execute the program, write outputs. The program follows the sequence of instructions. It typically takes a time span of tens of milliseconds for the processor to evaluate all the instructions and update the status of all outputs.

Most PLCs lack a strict access control and version control system. This makes it likely that unauthorized changes to programs might happen and remain unnoticed. Therefore, remote control to an automation system, and in particular to an automation system comprising one or more PLCs, is typically prohibited for security reasons.

According to embodiments of the invention, remote control of the automation system may be enabled in a save manner, because the security interface will verify each request and will forward the control parameters only of those requests which have been verified to be valid. According to preferred embodiments, the entity having submitted the request has to successfully authenticate at the system. If authentication fails, the request will not even be forwarded to the security interface. Hence, the system according to embodiments of the invention guarantees that only requests of authenticated, trustworthy entities which comprise control parameters having been verified to be plausible and save will be propagated to and stored in the plant machinery database which is the basic means of controlling the actions of the machines of the manufacturing plant.

According to embodiments, the verifying of the request comprises performing a plausibility check. Performing the plausibility check comprises checking if the control parameters comprised in or derived from the request fulfills one or more criteria selected from a group comprising:
- the value of the control parameter is achievable by the one or more of the machines to be operated in accordance with the stored control parameters; for example, if a control parameter sets the pressure to be created in a given tank to a value which cannot be reached by the respective pumps which are to be used for generating a desired pressure, the request will be considered to be invalid; and/or
- the value of the control parameter is safe for the one or more of the machines to be operated in accordance with the stored control parameters; for example, if a control parameter sets the pressure to be created in a given tank to a value which can be reached by the respective pumps but which imposes a security risk, e.g. because it exceeds a maximum pressure limit considered as safe, the request will be considered to be invalid; and/or
- the value of the control parameter is suitable for providing a manufactured product meeting a quality criterium; For example, if a control parameter sets the pressure to be created in a given tank to a value which is within a pressure range known to result in a poor product quality, the request will be considered to be invalid.

The request verification may comprise checking if the control parameters comprised in the request fulfills two or more of the above-mentioned criteria and optionally if the parameters fulfil further criteria related to manufacturing process times, material costs, energy consumption or the like which may be associated with a given control parameter. The request verification may be rule-based and may comprise evaluating the control parameters with one or more global, machine-agnostic and/or plant-agnostic rules and/or with one or more machine-specific or plant-specific rules. In addition, or alternatively, the verification of the control parameters can comprise performing complex computational tasks. For example, predictive models, e.g., machine-learning models such as support vector machines or neural networks may be used for simulating the manufacturing process or individual steps thereof under the assumption that the control parameters specified in the request are used during the production, and checking if the predicted/simulated manufacturing process fulfills one or more criteria related to safety, efficiency, costs and/or product quality.

According to embodiments, the system comprises a service interface. The service interface is configured to receive the request from a client and to forward it to the security interface. The security interface is configured to receive requests only from the service interface.

This may increase the security even further, because the security interface does not receive the request from a client directly. Rather, the security interface is shielded from direct contact with the client via the service interface. This ensures that only requests which have been processed and which have been actively forwarded by the service interface to the client interface will be processed and verified by the security interface. In a further beneficial aspect, this allows the service interface to be implemented as an interface which is easily accessible by a variety of different clients. For example, the service interface can comprise a plurality of different webservices which are adapted to different types of clients such as remote users using VR glasses for submitting requests for controlling robots or other machines of the plant, or remote client applications operated by customers of the company operating the plant, or edge computer systems. Each of the services may be customized for optimized interaction with the respective type of client. For example, each of the services may comprise a REST-API enabling the client to specify and submit requests to respective services.

According to embodiments, the system comprises an ID-provider module operatively coupled to the service interface. For example, the ID-provider module can be an LDAP directory or other authentication system. The service interface is configured to receive the request from at least one client; authenticate the at least one client; in response to the at least one client successfully authenticating at the service interface, forward the request to the security interface. In the event that the at least one client has failed to authenticate at the service interface, the service interface does not forward the request to the security interface.

This may increase security as automation systems typically do not include authentication means. By requiring a client to successfully authenticate to the service interface in order for requests submitted by that client to be forwarded to and verified by the security interface, the security of the process automation system may be significantly improved.

According to embodiments, the security interface is configured for:
- identifying one or more further control parameters whose values depend on values of one or more of the control parameters specified in or derived from the request; and
- replacing the at least one control parameter comprised in or derived from the request by the identified one or more further control parameters and/or supplementing the control parameters comprised in or derived from the request with the identified one or more further control parameters.

The identified one or more further control parameters are stored in the plant machinery database for controlling the operation of one or more of the machines (instead of or in addition to the control parameters originally comprised in or derived from the request).

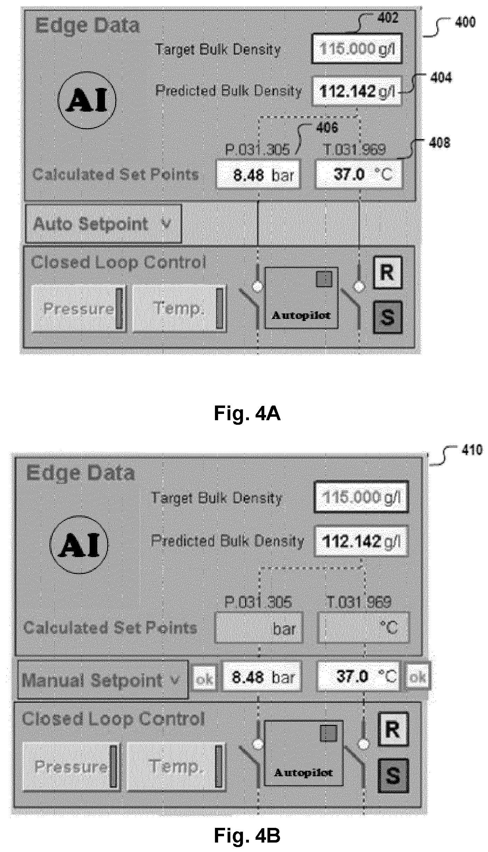

The above-mentioned steps may also be referred to as "parameter mapping" process. Identifying the further parameters may include analyzing a mapping, e.g., a file or a database record or any other form of data structure which assigns one or more control parameters to one or more further control parameters, respectively. The mapping may, for example, comprise mapping a machine-agnostic (a machine-independent) parameter such as a temperature to a machine-specific parameter, e.g., a temperature specified in a machine-specific temperature scale ranging from 0 to 5 instead of an absolute temperature specified in Kelvin or °C. The mapping procedure may also comprise a more complex computation of the one or more further control parameters. For example, the originally specified control parameter may be a desired product property and the computation of the further control parameters may comprise predicting one or more further control parameters which are capable of and/or required for providing a product having the desired property (see, for example, the description of figures 4A and 4B).

The mapping of control parameters may allow the number of control parameters to be increased and/or the mapping of machine-agnostic parameters to machine-specific parameters. This may have the advantage of allowing remote clients, e.g., edge-devices of customers wishing to monitor and/or control a manufacturing process of a product having been ordered by a customer, to control and/or monitor the production process which customer-specific control parameters without having to disclose too many details of the manufacturing plant, e.g. the type and amount of the machines used for manufacturing the product. Embodiments of the invention may enable the owners of a manufacturing plant to allow their customers to monitor and/or control the manufacturing process without the risk that the customers could intentionally or unintentionally control the manufacturing process in a way that would put the plant and the employees working there at risk, and without the owner of the plant having to disclose to the customers sensitive details of the machines comprised in the manufacturing plant.

According to one example, the control parameters originally specified in the request may be a desired temperature of a reaction tank (machine-agnostic parameter) and the identified further parameters may be a heating rate or cooling rate to be set on a particular heater or cooling device of the vessel to achieve the desired temperature (machine-specific control parameters or set points).

According to embodiments, the security interface is configured for validating the identified one or more further control parameters (also referred to as validating the "mapped" control parameters). The validation comprises performing a plausibility check of the further control parameters, the plausibility check comprising checking if the further control parameters fulfill one or more criteria selected from a group comprising:
- the value of the identified further control parameter is achievable by the one or more of the machines to be operated in accordance with the stored identified further control parameter; and/or
- the value of the identified further control parameter is save for the one or more of the machines to be operated in accordance with the stored identified further control parameter; and/or
- the value of the identified further control parameter is suitable for providing a manufactured product meeting a quality criterium.

In the event of one or more of the identified further control parameters being determined to be invalid, because they do not meet the criterion, neither the control parameters originally comprised in the request nor the further identified control parameters are stored in the plant machinery database. Instead, the request is considered to be invalid.

According to embodiments, the system further comprises: a feedback interface configured to return request-related feedback information to a client that has submitted the request, the feedback information being free of any control parameters or status information of the one or more machines and merely indicating whether or not the request was successfully executed.

Providing a feedback channel separate to the communication channel used for forwarding the configuration data may have the advantage of increasing security (a compromised feedback channel will have no impact on the transfer of the control parameters), flexibility (the security means of the feedback channel may be less strict) of controlling the automated manufacturing process. In addition, the accuracy of the request verification performed by the security interface may be increased, because the validity and plausibility of a request may depend on the current and constantly changing status of one or more machines in the manufacturing plant.

According to embodiments, the security interface is configured for:
- generating an acceptance request, the acceptance request being configured for prompting an entity to accept a requested modification of one or more of the control parameters stored in the plant machinery database; the entity can be, for example, a human user locally operating at the plant or a software program;
- providing the acceptance request to the entity; for example, the security interface may cause a software, e.g. the visualization engine, to generate a message prompting a local user via AR glasses or via a display of one of the machines for approval of the requested control operation;
- in response to receiving a response indicating acceptance by the entity, performing the storing of the control parameters comprised in or derived from the request in the plant machinery database.

Storing the control parameters only in response to receiving an indication of an acceptance of the proposed control parameters by the entity may have the advantage that the security is increased. A remote user may not be able to get a full picture of all processes going on at a manufacturing line in a plant, so the reconfiguration of a machine may impose negative effects on the product, the machines, the manufacturing process or the personnel working in the plant which can only or can better be perceived by a local user. By asking a local user for acceptance of the control commands in form of modified control parameters provided by a remote client, the risk of the occurrence of the above-mentioned negative effects may be reduced.

In response to receiving a response indicating non-acceptance by the entity, the security interface performs the storing of the control parameters (comprised in or derived from the request) in the plant machinery database.

According to embodiments, the security interface comprises at least:
- a first sub-module configured to perform a first part of the verifying of the request, the first part of the verification using generic, non-machine-specific and non-plant-specific rules;
- a second sub-module configured to perform a second part of the verifying of the request, the second part of the verification using machine-specific and/or plant-specific rules;

The first sub-module is part of the L3 level of the multilevel automation pyramid and the second sub-module is part of the L2 level. For example, the first sub-module is hosted on a computer system hosting the components of the L3 level and the second sub-module is part of the L2 level.

According to some examples, the first sub-module comprises a first rules engine and a plurality of first functions respectively configured to trigger execution of one or more of the non-machine-specific and non-plant-specific rules by the first rules engine. The second sub-module comprises a second rules engine and a plurality of second functions respectively configured to trigger execution of one or more of the machine-specific and/or plant-specific rules by the second rules engine.

Using a security interface comprising two different sub-modules hosted on different computer systems and levels of automaton control may have the advantage of increasing the flexibility of the system. For example, the second sub-module may be defined or customized by the operator of the plant who may be better aware of the details of the machines used in a specific plant. This may ease the specification of plant-specific or machine-specific rules used for verifying the request. The first sub-module may be defined or customized by users who may be familiar with global, machine-agnostic and/or plant-agnostic aspects of a manufacturing workflow. As the two sub-modules are instantiated and maintained separately, it is not necessary to allow the operator of a plant to modify the global, machine-independent rules and it may not be necessary to allow the operator of the L3 and higher levels of automation control to modify the plant-specific or machine-specific rules of the second sub-module. This may increase security.

According to some embodiments, the second sub-module allows only the first sub-module to provide control parameters and does not accept or process control parameters or requests comprising the same provided by different software programs.

According to some embodiments, the request submitted by the requesting client comprises one or more machine-agnostic function calls which indicates a step of a manufacturing workflow to be executed. The security interface is configured to perform a mapping of the machine-agnostic function calls to calls which can be interpreted by a control interface of a respective one of the machines of the plant. If the request is considered valid, the security interface will forward the mapped, machine-specific function calls directly or, preferably, indirectly, e.g. via a database service interface, to the one or more machines configured to interpret and execute the machine-specific function call.

According to embodiments, the acceptance request is generated by the second sub-module of the security interface. The response of the entity may be communicated back to the client and/or to the second sub-module of the security interface.

According to embodiments, the system comprises a first virtual machine configured to host the first sub-module of the security interface (and optionally also further components of the third level (L3) of a multi-level automation system architecture)., and a second virtual machine configured to host the second sub-module of the security interface (and optionally also further components of the second level (L2) of a multi-level automation system architecture). The first and second virtual machines are hosted by different virtual machine hosts and/or are separated from each other via a firewall.

This may strengthen the separation of the tasks executed by the first sub-module of the security interface/the L3 level on the one hand and of the tasks of the second sub-module of the security interface/the L2 level of the multi-level automation system on the other hand, thereby ensuring that any malware or other security problem which may exist in the L3 level cannot be propagated to the - typically more vulnerable - L2 level and the automation system. For example, the only supported data exchange means between the components of the L3 level and the components of the L2 level and the machines of the automation system may be the data communication channels provided by the security interface, namely the unidirectional channel for verifying and forwarding the request with the control parameters to the automation system and the feedback channel for returning feedback information from the automation system to the client.

According to embodiments, the security interface is implemented as a DMZ or demilitarized zone (sometimes referred to as a perimeter network or screened subnet). A DMZ is a physical or logical subnetwork that contains and exposes an organization's external-facing services to an untrusted, usually larger, network such as the Internet. This will add an additional layer of security to the processed performed within the security interface: an external network node can access only what is exposed in the DMZ/security interface, while the rest of the data and software programs executed within the DMZ/security interface is protected behind a firewall. The DMZ functions as a small, isolated network positioned between an outside-network such as the Internet and the private, internal network of IT-resources. The implementation of firewalls, in particular of a firewall between the security interface and the service interface, ensures that the security interface is a DMZ.

According to embodiments, the first and the second virtual machines respectively are implemented as a container.

Using different virtual machines, which may be implemented in the form of containers, may ensure that the L2 components (which are the only components able to control the machines of the automation system) are strictly isolated from the outside and exchanges data with the outside, in particular with L3 level components, only via defined and secure data exchange interfaces.

According to embodiments, the request is generated by a remote client, e.g., a remote human user or a remote client device or a client software, whereby the remote client is connected to the system via a network, e.g. the Internet. Typically, the remote client is remote to the manufacturing plant. The security interface is used as a remote-control access path for the remote client to the automation system and the machines controlled by the automation system.

This may have the advantage of providing, via the security interface, a universal entry point for clients, in particular users, of many different remote places and for integrating (existing) automation system into a new and typically more sophisticated control software. The security interface provides for a remote-control access path via the security interface to the automation system and the machines controlled by the automation system.

According to some embodiments, one or more of the machines controlled by the automation system comprise a local access interface for enabling local users and/or local robots to control the machines directly via a second, e.g. field-based communication channel. This may provide for a high degree of flexibility as both a remote user and a local user may execute some control functions on respective machines. In some examples, the access and control permissions of remote users and local users may differ from each other. For example, only a (remote) expert user may be permitted to perform changes on some control parameters which may have effects on many machines and processes of the automation system. On the other hand, only a local user may be permitted to initiate some operations, e.g., the opening or closing of a door, the activation of a press, etc., which may constitute a security risk if initiated only by a remote user who may not be able to recognize if a moving part such as a door or a press might hit a person or damage an object standing in the way.

According to embodiments, the system further comprises a visualization engine configured to generate a graphical representation of digital twins of the machines of the plant and/or of products manufactured by the machines.

According to some examples, the request is submitted by a remote human user wearing virtual reality (VR) glasses operatively coupled to the visualization engine. The visualization engine visualizes at least some aspects of a manufacturing process executed by the machines via the VR glasses.

For example, the visualization engine may enable a remote user wearing VR glasses to see the one or more machines he or she currently tries to reconfigure and control.

In addition, or alternatively, the visualization engine is configured to create an augmented reality for one or more local users wearing AR glasses and operating within the plant, the augmented reality comprising an avatar of a remote user and/or comprising virtual graphic objects assisting in maintenance or control of one or more of the machines.

For example, a robot operating locally at the plant may be controlled by the remote user and act as a physical representation of the remote user. When the remote user turns in a given direction, the local robot will follow this movement. The local robot may comprise one or more cameras, and the images acquired by the cameras of the robot will be transmitted to the visualization engine and forwarded by the visualization engine to the VR glasses of the remote user. Thereby, the remote user may see via the VR glasses what the robot can see. This may increase the security, because the remote user may now be enabled to perceive objects in the spatial vicinity of the one or more machines to be controlled by the remote user. This may allow the remote user to recognize any obstacles or other objects or events which may indicate that a certain control command should not be submitted as it would impose security risk to a human or a component of the manufacturing plant, or which may indicate that a certain control command should be submitted to prevent the security risk. The control command may be submitted as a request to modify one or more of the control parameters of one or more of the machines in the plant machinery database.

According to some embodiments, the visualization engine supports voicemail and/or a chat between the remote client being a remote human user and a local user at the manufacturing plant wearing AR glasses. For example, the remote user may wear VR glasses and the local user may wear AR glasses. Bot the VR glasses and the AR glasses may comprise a microphone and an audio output interface, e.g., a loudspeaker. The remote user and the local user may exchange real-time voice messages via the microphones and loudspeakers of their respective VR or AR glasses.

Preferably, an AR application is configured to control the volume of the audio output generated by the AR glasses of the local user such that the volume of the output voice of the remote user positively correlates with the spatial proximity of the local user and the position of the avatar of the remote user in a coordinate system used by the AR glasses to display virtual objects. In addition, or alternatively, a VR application is configured to control the volume of the audio output generated by the VR glasses of the remote user such that the volume of the output voice of the local user positively correlates with the spatial proximity of the remote user and the position of an avatar of the local user in a coordinate system used by the VR glasses to display virtual objects.

According to some examples, the system further comprises a plant environment database and a database replication module. The plant machinery database comprises models, position information and status information of the machines and/or of products produced by the machines. The position information is continuously updated to reflect the real positions and status of the machines and/or products processed or produced by the machines. The database replication module is configured to continuously replicate only predefined sub-sets of the data of the plant machinery database to the plant environment database, thereby filtering out sensitive machine-related data. The plant machinery database is configured to prohibit access by the visualization engine. The visualization engine is configured to only use data comprised in the plant environment database for generating visual representations of the machines of the plant and/or of products processed by the machines.

Using two different databases as specified above may have the advantage of an increased security: the visualization engine continuously generates the graphical representation of the digital twins of the machines and/or objects involved in the automated production process, thereby providing a human user a continuously updated overview of the process. The filtering functionality ensures that sensitive machine-related data such as the exact position, sensitive status parameters or control parameters are not disclosed to the L3 layer or any other system outside of the automation system. The database replication module merely replicates information which is necessary for creating the graphical representation of the machines or products, e.g. a model being identical or similar to the structure of the machines, or a very abstract representation of the operations executed by the machines.

The graphical representations of the digital twins can be, for example, a conventional 2D representation of the machines and/or products generated for display via a computer scree or a smartphone screen. According to other examples, the graphical representation is a 3D representation to be displayed via VR glasses or AR glasses such that a 3D representation within a 3D coordinate system is provided.

According to embodiments, the entity receiving the acceptance request is one of the local users.

According to embodiments, the machine whose automatic operation is performed in accordance with the stored control parameters comprised in or derived from the valid request is a robot, in particular a robot controlled via a visualization engine by a remote user.

According to embodiments, the machine whose automatic operation is performed in accordance with the stored control parameters comprised in or derived from the valid request and/or another machine of the manufacturing plant comprises a local control interface, the local control interface enabling a local operator to access and control the machine via a separate, local communication channel. For example, the local interface can be a display screen of one of the machines.

In a further aspect the invention relates to the use of a system according to any one of the embodiments described herein for automating processes of a manufacturing plant.

In a further aspect, the invention relates to a method for automating processes of a manufacturing plant, comprising:
- providing a system for process automation of the manufacturing plant, comprising:
   ∘ a plurality of machines of the manufacturing plant,
   ∘ a plant machinery database comprising control parameters for the machines;
   ∘ an automation system for automatically operating the machines of the manufacturing plant in accordance with the control parameters in the plant machinery database;
   ∘ a security interface;
- receiving, by the security interface, a request;
- verifying, by the security interface, the request,
- in response to determining that the request is valid, storing, by the security interface, control parameters comprised in or derived from the request in the plant machinery database;
- automatically operating, by the automation system, the machines in accordance with the stored control parameters comprised in or derived from the valid request.

An "interface" as used herein is a software- and/or hardware-based boundary across which two or more separate components of a data processing system exchange information.

A "service interface" as used herein is an interface across which two or more clients exchange information with the system for automating processes of a manufacturing plant. In particular, the clients can be remote clients connected with the service interface via a network such as the internet. The clients can be users, client devices, client software programs, edge computer systems or combinations thereof.

A "security interface" as used herein is an interface across which requests, in particularly requests for changing configurations of manufacturing plant machines, are communicated to an automation system.

A "machine" as used herein is any physical entity involved in the manufacturing and/or processing of a product manufactured by a plant. For example, a machine can be a piece of equipment that is powered by electrical, mechanical, thermal, chemical or other form of energy to perform one or more operations. A machine can also be a device or device component, equipment, a robotic arm, a conveyor belt, a robot, an extruder, a tumbler, an oven, or any other type of physical component which may perform one or more operations in a manufacturing workflow. The nature and position of the machines in the plant may depend on the type of product to be manufactured.

A "system for process automation", as used herein is a distributed networked system comprising an automation system including a plurality of machines of one or more plants and one or more further system components, e.g. L3 and/or L4 components of a process automation pyramid, for automatically controlling the operation of the machines of a respective one of the plants such that a workflow is executed. The system is used for and/or configured for process automation, in particular of processes in one or more manufacturing plants.

An "automation system", also referred to as "process automation system (PAS)" as used herein is a system used to automatically control a process in a plant such as chemical, oil refineries, paper and pulp factories. The PAS often uses a network to interconnect sensors, controllers, operator terminals and actuators. A PAS as used herein can be based on open standards, but it may also be based and/or comprise proprietary standards and is in this case also known as a DCS (distributed control system). An automation system may be associated with SCADA systems. An automation system may use established, possibly plant specific protocols or technologies. According to embodiments, an automation system comprises one or more machines of a plant, PLC (process logic control) interfaces and/or PCS (process control system) interfaces of the machines. Optionally, it may also comprise a plant machinery database comprising control parameters of the machines.

The term "L3 level" or "L3 IT infrastructure system" as used herein relates to IT system components comprised in the Manufacturing Operations Level. This level is referred to as "L3" or "Level 3" in the Purdue model of a multi-level automation system, but the terms "L3 level" or "L3 IT infrastructure system" are also used herein to refer to IT system components included in the Manufacturing Operations Level, which may be referred to differently in other models of multi-level automation systems. The L3 components execute higher-level control functions than those in the Core Process control system.

The term "L2 level" or "L2 IT infrastructure system" as used herein relates to IT system components comprised in the Core Process control level. This level is referred to as "L2" or "Level 2" in the Purdue model of a multi-level automation system, but the terms "L2 level" or "L2 IT infrastructure system" are also used herein to refer to IT system components included in the Core Process Control level, which may be referred to differently in other models of multi-level automation systems.

A "database" as used herein is any data structure allowing to store data temporarily or permanently. For example, a database can be a data storage managed by a database management system (DBMS), a file directory, a set of one or more files, a single file such as a spreadsheet, etc. The database can be a data structure adapted for storing data in digital form, e.g., an electronic or optical storage medium.

A "plant machinery database" as used herein is a database comprising data related to one or more machines of a manufacturing plant. For example, the database can comprise control parameters for one or more machines, and/or data being descriptive of one or more machines, e.g. machine models, machine status data, machine configuration data and/or other machine-related data allowing to generate a digital twin of a machine and/or data which allows simulating operation of a machine or measurement data obtained by one of the machines. The plant machinery database may also comprise position information and/or status information of objects, e.g. educts or products, processed or generated by the machines of the plant.

A "metaverse" as used herein is a virtual representation of parts of the world customized to be displayed preferably via virtual reality glasses and/or augmented reality glasses. The metaverse can be implemented as a spatially merged network of 3D virtual worlds, e.g. a 3D world being a digital twin of a plant and its machines and the 3D world of one or more remote and/or local users wearing VR glasses and AR glasses.

A "digital twin" as used herein is a digital representation of a real-world physical object or process that serves as the digital counterpart of it for practical purposes, such as visualization, simulation, integration, testing, monitoring, or maintenance.

A "plant", also referred to as "factory" or "manufacturing plant" as used herein is an industrial facility, often a complex consisting of several buildings filled with machinery, where workers and/or machines manufacture items or process each item into another. The manufacturing plant may be, for example, a plant for producing vehicles or vehicle parts, for producing electronic consumer goods, or a plant for synthesizing or processing chemical substances.

A "plant environment database" as used herein is a database comprising data related to a plant or plant environment. The plant environment database can comprise, for example, a copy of parts of the data of the plant machinery database. Preferably, sensitive machine-related data (e.g. status parameters, the position, configuration parameters, etc.) are not comprised in the plant environment database.

According to some examples, the parts of the data of the plant machinery database comprised in the plant environment database comprises data which is used during a plausibility check executed by the L3 sub-module of the security interface. This data may comprise e.g. plausibility criteria, thresholds and reference parameter values which relate to the plant or its environment, but not to individual machines. For example, the data may comprise the price threshold for energy deemed acceptable, weather data, information on ongoing manufacturing processes of other plants and their respective demands, quality indicators required by different customers with respect to a product to be manufactured, etc.

In addition or alternatively to the data used for the request verification, the parts of the data of the plant machinery database comprised in the plant environment database comprises data enabling a visualization engine to generate a digital visual representation of the one or more machines whose data is comprised in the plant machinery database and/or to generate a digital visual representation of the objects processed or produced by said machines.

A "visualization database" as used herein is a database comprising data enabling a software, e.g. a visualization engine, to generate a digital visual representation of one or more physical objects. For example, the visualization database may comprise a 2D or 3D model of a physical object, e.g. a photorealistic or simplified image or hologram of the object. The visualization database may comprise spatial information of the objects, e.g. regarding the orientation of an object or regarding the location of an object within a virtual coordinate system. Preferably, the visualization database is free of an indication of the exact geographic location of the object. For example, the visualization database may comprise digital models and/or generic status information of one or more machines whose control data is comprised in the plant machinery database and/or digital models and/or generic status information of the objects processed or produced by said machines.

According to some example implementations, the plant environment database is used as visualization database and vice versa.

An "edge computer system" as used herein is a computer system installed at spatial proximity of the machines of a plant and which is configured to process data generated by the machines of the plant. The data may in particular comprise real-time data. Despite its spatial proximity, the edge computer system according to some examples is not part of the automation system of the plant. For example, the edge computer system may not be part of the L1, L2 or L3 level of a multi-level automatization architecture of the plant. The edge computer system may be configured to continuously receive, store and evaluate data provided by the machines during a manufacturing process, e.g. machine status data, product status data, process parameter values, product properties, etc. Thanks to the spatial proximity to the source of the data, an edge computer system may be able to react very quickly, with very short latency times, to events occurring during the manufacturing process. However, for security reasons and due to a lack of suitable interfaces, it was hitherto not possible to integrate edge computing systems into process automation systems. By enabling edge computer systems to generate and submit requests for controlling one or more of the machines to the security interface, embodiments of the invention may allow integrating edge computer systems into systems for automated process control. For example, the edge computer system may be configured to continuously analyze status information received from the one or more machines of the plant, and upon determining that an undesirable event has happened or is predicted to happen during the production workflow, to submit a request to the security interface, the request comprising control parameters adapted to prevent or mitigate the effects of the undesired event. The undesired event can be, for example, shortage of a consumable, congestion of products a conveyor belt, the temperature of a machine exceeding a threshold, or the like.

A "control parameter" as used herein is a parameter which influences the state of a machine and/or the way the machine operates. For example, a control parameter can be a configuration parameter, a function argument for calling a PLC interface of the machine, a command, or a combination of two or more of the foregoing.

A "request" as used herein is a message sent between objects. For example, a request may be sent from a client via a network to the system for process automation. There, the request may be processed, optionally modified or supplemented and forwarded by multiple interfaces until it reaches its destination or until the forwarding of the request is rejected.

A "visualization engine" as used herein is a monolithic or distributed software configured to generate visual representations of physical objects. The visual representations can be, for example, 2D representations to be displayed via a screen of a computer or smartphone, and/or 2D or 3D representations to be displayed via VR glasses and/or AR glasses. In the latter case, the visualization engine, which may also be referred to as "metaverse engine", is interoperate with an AR application to cause AR glasses controlled by this AR application to display virtual object representations to a user wearing the AR glasses. In addition, or alternatively, the visualization engine is configured to interoperate with a VR application to cause VR glasses controlled by this VR application to display the streamed status information to a user wearing the VR glasses. In cases when the visualization engine is operatively coupled via one or more AR applications and/or VR applications to a plurality of users wearing AR glasses, VR glasses or a mixture of VR and AR glasses, the visualization engine may be configured to globally align virtual objects (their properties, dimensions, orientations and positions) with the coordinate system used by the VR glasses and AR glasses to display the virtual objects. As a consequence of this global alignment of virtual objects, the multiple users wearing the VR glasses and/or AR glasses may share at least partially a common virtual object world, which may comprise digital twins of a plurality of the machines of the plant, of one or more production lines of the plant and/or of users operating for or in the plant.

A "client" as used herein is a piece of computer hardware or software that accesses a service made available by a server via a computer network, whereby the service is accessed in particular as part of the client-server model of computer networks. The server is often (but not always) on another computer system, in which case the client accesses the service by way of a network, e.g. the internet. A client software may be a software which translates actions of a user into requests and other actions of the client software, therefore the term client may also refer to a user which uses a piece of hardware or software to access a service via the network. The term "client" may also be applied to computers or devices that run the client software.

For example, a client may be a computer program that, as part of its operation, relies on sending a request to another program or a computer hardware or software that accesses a service made available by a server (which may or may not be located on another computer). For example, web browsers can be used as clients that connect to web servers and retrieve web pages for display.

The expression "computer system" as used herein is a machine or a set of machines that can be instructed to carry out sequences of arithmetic or logical operations automatically via computer programming. Modern computers have the ability to follow generalized sets of operations, called "programs", "software programs" or "software applications". These programs enable computers to perform a wide range of tasks. According some embodiments, a computer system includes hardware (in particularly, one or more CPUs and memory), an operating system (main software), and additional software programs and/or peripheral equipment. The computer system can also be a group of computers that are connected and work together, in particular, a computer network or computer cluster, e.g., a cloud computer system. Hence, a "computer system" as used herein can refer to a monolithic, standard computer system, e.g. a single server computer, or a network of computers, e.g. a cloud computer system. In other words, one or more computerized devices, computer systems, controllers or processors can be programmed and/or configured to operate as explained herein to carry out different embodiments of the invention.

The embodiments and examples described herein are to be understood as illustrative examples of the invention. Further embodiments of the invention are envisaged. Although the invention has been described by way of example to a specific combination and distribution of software programs and computer systems, it is to be understood that any feature described in relation to any one embodiment may be used alone, or in combination with other features described, and may also be used in combination with one or more features of any other of the embodiments, or any combination of any other of the embodiments as long as these features are not mutually exclusive.

Accordingly, some embodiments of the present application are directed to a computer program product. Other embodiments of the present application include a corresponding computer-implemented method and software programs to perform any of the method embodiment steps and operations summarized above and disclosed in detail below.

Any software program described herein can be implemented as a single software application or as a distributed multi-module software application. The software program or programs described herein may be carried by one or more carriers. A carrier may be a signal, a communications channel, a non-transitory medium, or a computer readable medium amongst other examples. A computer readable medium may be: a tape; a disc for example a CD or DVD; a hard disc; an electronic memory; or any other suitable data storage medium. The electronic memory may be a ROM, a RAM, Flash memory or any other suitable electronic memory device whether volatile or non-volatile.

Each of the different features, techniques, configurations, etc. discussed herein can be executed independently or in combination and via a single software process on in a combination of processes, such as in client/server configuration.

It is to be understood that the computer system and/or the computer-implemented method embodiments described herein can be implemented strictly as a software program or application, as software and hardware, or as hardware alone such as within a processor, or within an operating system or a within a software application.

The operations of the flow diagrams are described with references to the systems/apparatus shown in the block diagrams. However, it should be understood that the operations of the flow diagrams could be performed by embodiments of systems and apparatus other than those discussed with reference to the block diagrams, and embodiments discussed with reference to the systems/apparatus could perform operations different than those discussed with reference to the flow diagrams.

In view of the wide variety of permutations to the embodiments described herein, this detailed description is intended to be illustrative only, and should not be taken as limiting the scope of the invention. What is claimed as the invention, therefore, is all such modifications as may come within the scope of the following claims and equivalents thereto. Therefore, the specification and drawings are to be regarded in an illustrative rather than a restrictive sense.

### Brief description of the drawings

In the following embodiments of the invention are explained in greater detail, by way of example only, making reference to the drawings in which:
- Figure 1: shows a high-level block diagram of a system for process automation;
- Figure 2: shows a block diagram of a further system for process automation;

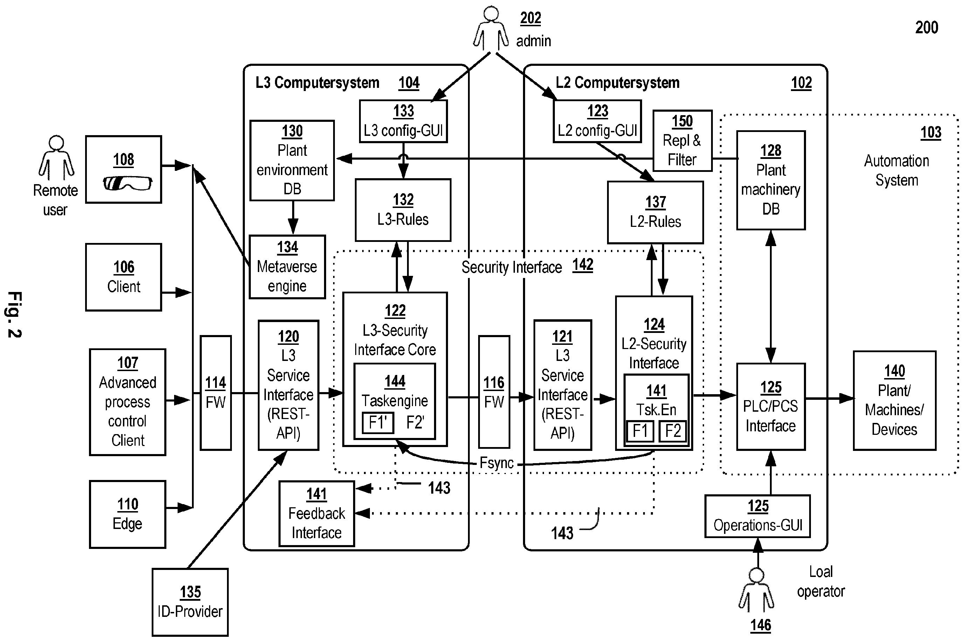

- Figure 2: shows a block diagram of a system for secure visualization of components of an automation system;
- Figure 4A: shows an example of a GUI enabling a local user to monitor the state of manu-facturing process step;
- Figure 4B: shows another example shows an example of a GUI enabling a local user to monitor the state of manufacturing process step;

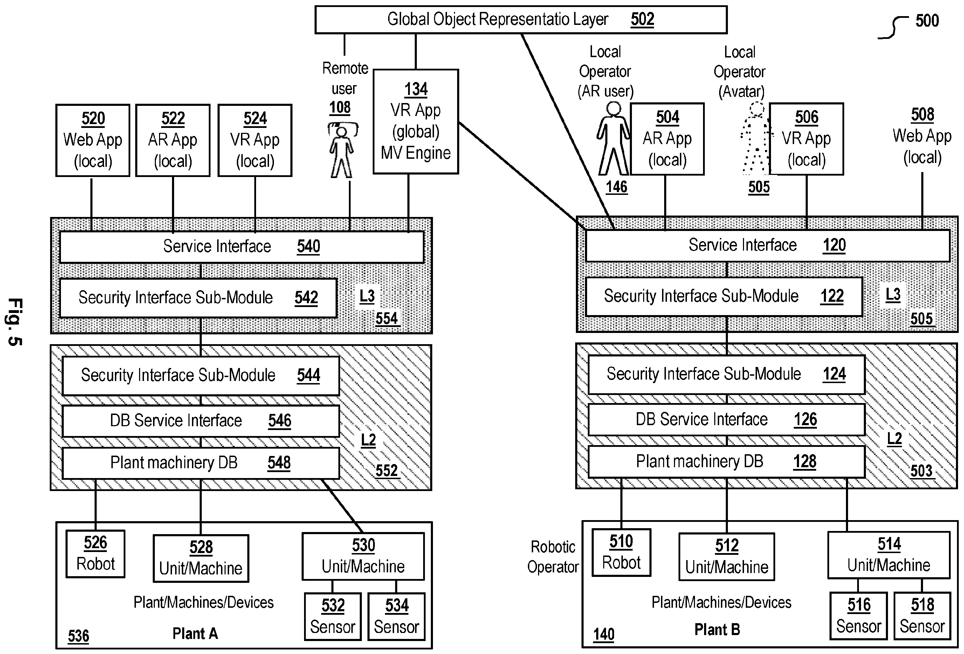

- Figure 5: shows a distributed system for controlling manufacturing processes in multiple plants;

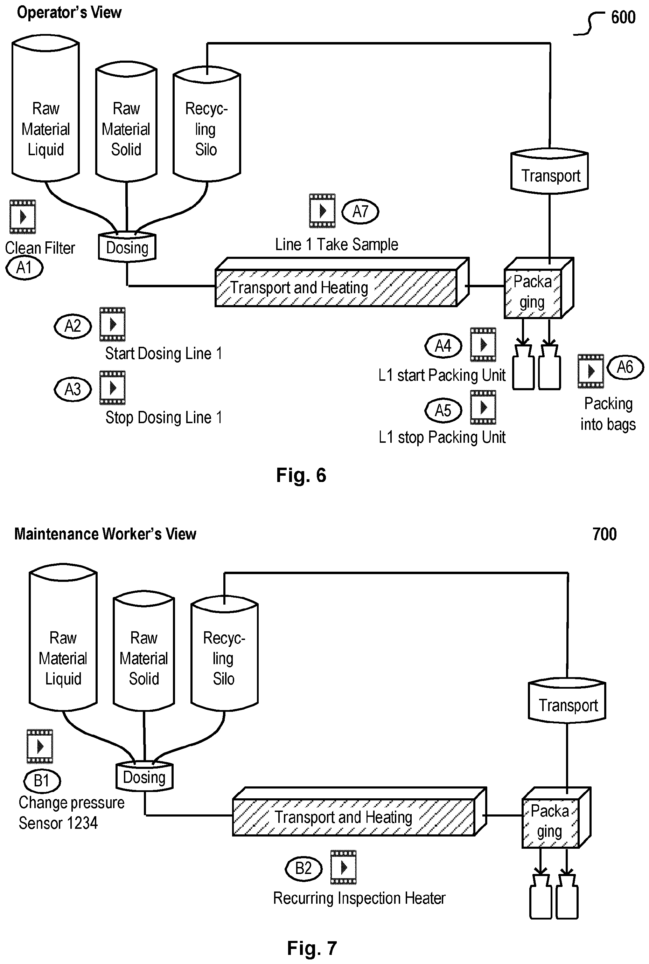

- Figure 6: illustrates system configured to display various virtual objects to an "operator" user;
- Figure 7: illustrates system configured to display various virtual objects to a "maintenance worker" user;

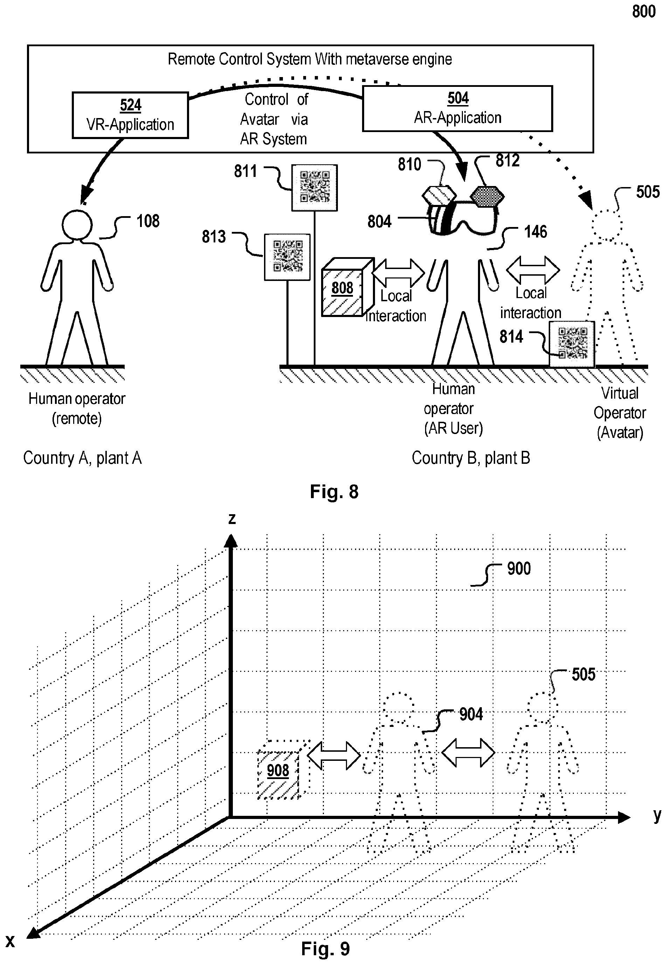

- Figure 8: illustrates shows an avatar of a remote user;
- Figure 9: illustrates a coordinate system used for representing of real-world machines and local user avatars in a virtual metaverse to a remote operation; and

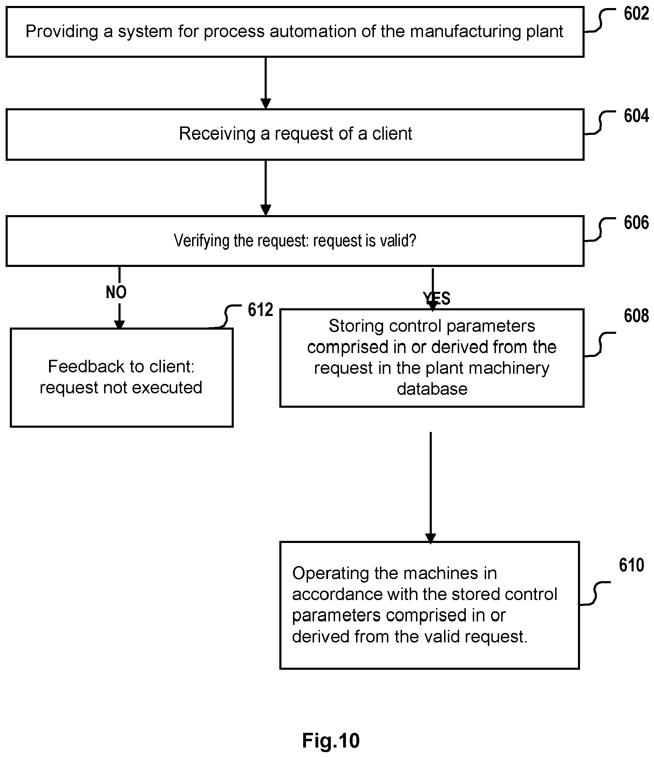

- Figure 10: is a flow chart of a method for enabling safe remote control of an automated manufacturing process.

### Detailed description

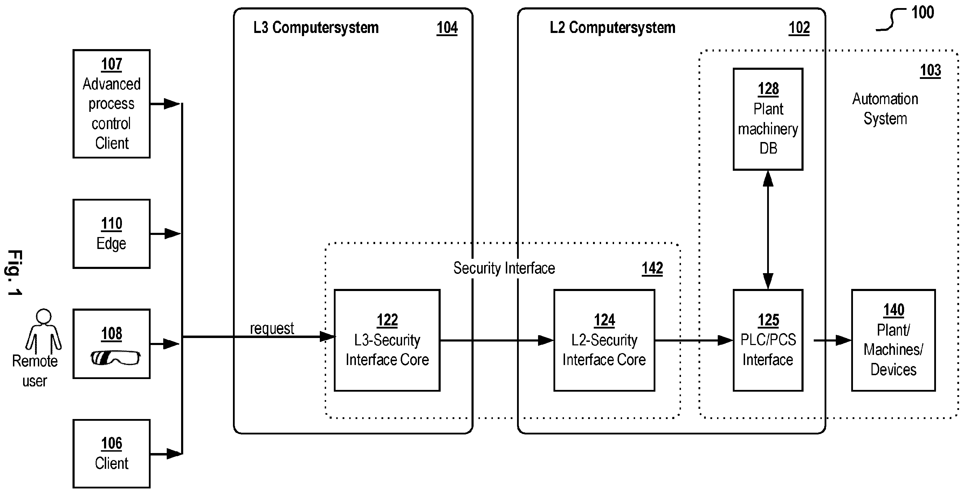

Figure 1 shows a block diagram of a system 100 for process automation of a system 100 for process automation of a manufacturing plant. The plant may be, for example, a plant for synthesizing chemical compositions, for manufacturing vehicles, computers or consumer goods, furniture or food.

The plant comprises a plurality of machines 140 that are used for manufacturing and/or processing one or more physical objects. The type of machines depends on the type of product to be manufactured and/or the machine manufacturers chosen by the owner of the plant. For example, a machine may be an electronic device, a jig, a robot arm, a conveyor belt, a robot, an extruder, a tumbler, an oven, etc.

The system further comprises a plant machinery database 128 which may be part of the L2 level IT infrastructure of the plant. For example, the machine database can be a directory of files, a single file, a combination of files, a database managed by a database management system (DBMS) or a graph database (GDB) such as Neo4J, or a combination thereof.

The plant machinery database 128 comprises control parameters, e.g. configuration parameters, position information and/or structural or functional models of the machines and/or processed digital objects and/or data for generating a digital twin of the one or more machines 140 of the manufacturing plant and/or of the physical objects processed in the plant. For example, the control parameters may be a temperature of a reaction vessel for a chemical reaction, the temperature of an oven, the rotational speed of a stirrer, the speed of a pump, the pressure in a pressurized gas tank, the amount of a particular substance to be added in a reaction vessel, a desired pH value in a reaction vessel, a desired CO² concentration in a gas tank, or the like. The control parameters may comprise target parameter values, i.e., parameter values which indicate the state of a machine or the state of a product to be manufactured which should be achieved. The data for generating a digital twin may comprise, for example, positional information of machines and/or physical objects which is continuously updated, a digital 2D or 3D model of a respective one of the machines of the plant and may further comprise data being indicative of the dynamic behavior of the machine as a function of environmental parameters, control parameters or other parameters.

The system 100 comprises an automation system 102 for automatically operating the machines 140 of the manufacturing plant in accordance with the control parameters in the plant machinery database. For example, the automation system may comprise one or more programmable logic controllers (PLCs) 125 configured to control one or more manufacturing processes executed by the machines 140 of the plant. The security interface may be configured to control one or more of the machines directly or via the PLC/PCS interface 125.

The PLC may cyclically execute a program. In each cycle, this program may read current measurement parameters provided by the machines and one or more of the control parameters stored in the plant machinery database 128 as input, processes inputs, and writes output parameters. The output parameters are forwarded to one or more of the machines and control the actions performed by the machines. Hence, these output parameters and also the control parameters on which the output parameters depend may act as control commands, because they determine the behavior of the machines and hence the manufacturing process. It typically takes a time span of tens of milliseconds for the processor(s) of the automation system to evaluate all the instructions and update the status of all outputs. For example, SIMATIC S7 can be used as the automation system's PLC.

The system 100 further comprises system components in the Manufacturing Operations Level (Level 3 in the Purdue model) 104, in the following referred to as "L3 components". The L3 components execute higher-level control functions than those in the Core Process control system (Level 2 in the Purdue model, in the following "L2 components") 102. For example, at least some of the control functions executed by the L3 components may be machine-agnostic. The L3 system components are preferably hosted on one or more monolithic or distributed computer systems 104 which are operated separately from the L2 system components 102.

The system 100 comprises a security interface 142 including a first sub-module 122 which is part of the L3 level IT infrastructure and a second sub-module 124 which is part of the L2 level IT infrastructure of the system 100. Both sub-modules implement different parts of a request verification process.

The security interface 142 is configured to receive a request, e.g. a request for manufacturing a particular product and/or for modifying the production of a product from one or more clients 106, 107, 108, 110. The clients can be mobile clients, e.g. smartphones, notebooks or VR glasses, or stationary clients, e.g. a desktop computer system or an edge computer system.

For example, the edge computer system 110 can be a computer system located proximate one or more of the machines 140 of the plant but may not be fully integrated into the IT environment of the system 110. The edge computer system may be configured to collect log data and/or status data during an ongoing manufacturing process from one or more of the machines 140, analyze the data and automatically determine control parameter values (e.g. temperature, amount of substances added, pH value, etc.) considered to be suitable for improving the automated manufacturing process and/or the quality of the products generated. Upon determination of these control parameters, the edge computer system creates and submits a request for forwarding the control parameters via the security interface to the machines 140.

The client computer system 106 may be any type of computer system, e.g. a desktop computer, a laptop, a tablet computer, a notebook or a mobile phone.

The client 108 may be a remote user wearing VR glasses. The remote user may use the VR glasses to monitor one or more of the machines during the manufacturing process or during a maintenance time interval. The remote user may use the VR glasses to specify and submit a request comprising respective control commands to the security interface. Instead of implementing advanced IT-equipment like VR glasses into the Core Process Control (L2), embodiments of the invention may allow to constrain the direct control of such machines to the L2 level and provide for a secure option for a remote client to safely transfer control information to the machines via an access-protected unidirectional security interface 142.

The Advanced Process Control client 107 can be a client which comprises an advanced process control software to integrate requirements, demands and available resources of one or more plants. It may integrate multiple, heterogeneous, distributed plants. An Advanced process control software includes model-based software that is used to direct the process operation and is commonly referred to as multivariable predictive control (MPC) or model predictive control. These applications require that the process model created accurately represents the process dynamics.

The security interface is configured for receiving a request of a client. Preferably, the request is not received directly from the client but via one or more service interfaces illustrated in figure 2. The request is verified by the security module. If the security module determines that the request is valid, the security modules stores the control parameters comprised in the request or control parameters derived therefrom (e.g. in the course of a mapping and/or normalization operation) in the plant machinery database 128. If the request verification returns that the request is not valid, the control parameters are not stored in the plant machinery database.

Optionally, the security interface returns a response message to the entity having submitted the request to indicate that the request was not executed. Preferably, the security interface prompts a local operator 146 or a software application to approve the storing of the verified control parameters and/or to approve the machine operation to be triggered by the control parameters, whereby the control parameters are only stored in the database 128 if an acceptance message was received by the security interface.

The automation system is configured to repeatedly read the control parameters stored in the plant machinery database and to control the operation of the machines as a function of the currently stored control parameters. At least some aspects of the manufacturing process may be constantly monitored by the remote operator 108 via the VR glasses and the visualization engine 134.

Figure 2 shows a system 200 for process automation according to a further embodiment. It comprises the components and sub-systems already described with reference to figure 1.

According to the depicted example, each sub-module 122, 124 of the security interface 142 comprises a task engine 144, 141. The task engine 144 is configured to process an incoming request by applying a configurable ruleset 132. The rules 132 may comprise rules which are not related to specific properties of the machines 140 but rather may relate to more generic parameters, e.g., requirements or settings provided by a client (e.g. a customer), reference parameters and thresholds related to costs, required product properties, availability of educts, environmental parameters such as environmental temperature, or the like. For example, proprietary or open-source solutions such as Node Red or Drools can be used for implementing the task engines.

The task engines 144, 141 can be implemented as an event processing software with a low-/no-code interface, e.g. GUIs 133, 123, enabling a user to create and maintain the rules 132, 137 without requiring programming skills. The ruleset represent may enable the tasks engines 144, 141 to check an inbound request, and in particular to check if the inbound request is plausible. Thereby, the rules 132 may implement machine-agnostic checks, while at least some of the rules 137 may perform machine-specific checks, e.g. check if a control parameter, e.g. a temperature value or a rotational speed value is supported by and safe for the machine which is to be operated in accordance with this control parameter. Executing the rules by the task engines may comprise comparing the control parameters comprised in or derived from the request with reference values, with a history of respective control parameters previously used by the respective machine(s), with a predefined syntax or with pre-defined fixed or dynamic value ranges.

The reference values and thresholds used by the first security interface sub-module 120 for verifying a request may be stored in and read from the plant environment database 130 and the reference values and thresholds used by the second security interface module 124 may be stored in and read from the plant machinery database 128.

In addition to the rules, or alternatively to the rules, the tasks engines 144, 141 trained machine learning models, e.g. neural networks, for checking the control parameters. For example, the trained machine learning model may have been trained on a training data set comprising at least some of the control parameter values which have previously been used for operating the machines, and may have learned to correlate these control parameter values with information on product properties and/or safety of the manufacturing process.

According to some examples, the sub-module 122 of the security interface comprises first functions (F1', F2') and the second sub-module 124 comprises second functions F1, F2, whereby the structure of the first and second function (i.e., the number and type of input and output arguments) is continuously synchronized between the first and second sub-modules such that any change of the structure in the second functions (F1, F2) in the second sub-module 124 is propagated to the first functions F1', F2' in sub-module 122. The name and/or structure of the second functions F1, F2 may reflect the name and structure of respective functions of the PLC/PCS interface 125 which directly controls one or more of the machines 140. The request of the client may be or comprise a call to one or more of the functions. Automatically synchronizing the function structure may have the advantage of making the call to the PLC/PCS interface functions transparent to a client, without giving the client direct, unrestricted access to the interface 125, because the client can trigger execution of the function only after successful authentication and request verification, and because only a subset of the functions of the PLC/PCS interface 125 is made accessible via the functions F1, F2/F1', F2' of the security interface. Synchronizing the structure of the functions F1, F2 of the second sub-module 124 with the structure of the functions F1', F2' of a first sub-module 122 of the security interface 142 or with the respective functions of multiple first security interface sub-modules of multiple different L3 level IT infrastructure systems may allow integrating the L2 level IT infrastructure transparently into two or more different L3 level IT systems. Hence, the functions F1 F2 can likewise be used and called by tow or more different security interface sub-modules 122 and respective L3 level IT systems.

Any requests to control and/or reconfigure a machine submitted by the remote user 108 or another client is not submitted directly to the security interface 124, but rather via service interface 120 which may be part of the L3 level IT infrastructure of the system. For example, the service interface 120 may comprise a webservice interface customized for each of a plurality of different client types, e.g., an edge computer system 110, a remote user using VR glasses and/or a VR application to submit a request, or a client application of a customer trying to order and initiate the production of a certain product. Each of these services may be accessible via a REST API (representational state transfer application interface). The use of a REST API may ensure flexibility and extendibility of the system. It shields the security interface from untrusted clients, may implement client authentication procedures and enforces that only requests of authorized clients are forwarded to the security interface.

Upon a successful verification of the request by the first sub-module 122, the first sub-module or the task engine comprised therein may forward the request or the control parameter comprised in or derived therefrom to the second sub-module 124 by calling one of the functions F1, F2 of the second sub-module via the service interface 121.

According to the depicted example, both service interfaces 120, 121 may be implemented as webservices using an industry standard webserver, whereby the first functions F1', F2 are exposed via a REST-API of interface 120 and whereby functions F1, F2 are exposed via a REST-API of interface 121.

The system comprises a plurality of firewalls 114, 116 shielding the automation system 103 and also the security interface and other components from unauthorized access. Any attacker intending to modify the plant machinery database would have to overcome multiple firewalls. Each firewall acts as a network security system that monitors and controls incoming and outgoing network traffic based on predetermined security rules. It establishes a barrier between a trusted network or sub-system and an untrusted network or sub-system.

Some embodiments may comprise a log database and the security interface 142 may be configured to log all requests and the results of the request verification in the log database. This may ease error analysis and fraud detection. In some examples, the plant environment database 130 is used as log database.

According to some examples, the system, e.g. the L3 level IT infrastructure of the system, may comprise a visualization engine 134 configured to enable a remote user 108 to submit a request to the security interface via VR glasses. The visualization engine may support cooperation between the remote user 108 and one or more local operators146 working in the plant via a shared virtual reality (remote user) or augmented reality (local user, not shown). For example, the visualization engine 134 may be operatively coupled to a database 130 comprising data objects being digital twins of objects, in particular machines 140, of the plant. The database may also comprise objects being digital representations of the remote user(s) 108, in particular avatars, whereby the coordinate system of these objects in the database 130 is continuously updated with the current positions of the respective objects and users and wherein the position of these objects and users in a coordinate system of a shared metaverse is continuously mapped to the real-world coordinate system of the plant.

The system may further comprise an Identity Provider 135, e.g. a company ID-Provider like Active Directory, AzureAD or any LDAP service. Any client can be authenticated by the Identity Provider 135. Depending on the requesting system, the authentication can use personal or functional/machine identities. The service interface 120 may support different authentication workflows for different types of clients. As well, the company's authentication standards can be applied to the system and the authentication process, e.g., single factor or multifactor authentication, credentials, certificates, etc. The ID-provider 135 may be configured to check authorization of the requesting client based on groups and group memberships of the client.

In some embodiments, the security interface 142 does not store the control parameters provided in verified requests directly in the plant machinery database. Rather, the security interface calls a database service interface to cause the database service interface to store the control parameters in the plant machinery database. The plant machinery database may be configured to grant write access only to the database service interface and optionally a few further, trust-worthy entities. This may further increase security and protect the automation system from unauthorized manipulation.

As can be inferred from figure 2, the system 100 implements a unidirectional and highly secure communication channel for transporting control parameters comprised in a request from a client 108, 106, 110 to the machines of the plant. The request and/or the control parameters have to successfully pass multiple firewalls, a request verification step and preferably additional security checks such as authentication at the service interface 120 via the ID-Provider 135 before the parameters are finally stored in the database 128 to make them accessible for the machines.

The system, in particular the L3 level IT infrastructure of the system, may comprise a communication module comprising a key manager module. The communication module may establish an encrypted, unidirectional communication channel between the service interface 120 and the security interface 142. The communication module may also establish an encrypted communication channel between the service interfaces and the first sub-module of the security interface, and between the first and second sub-moules of the security interface. For example, an encrypted communication channel as used herein can mean that only the first sub-module of the security interface is allowed to receive data from and access the service interface 120. The communication module may in some embodiments further comprise a user registry, user-specific keys, and other user-related data. The user registry may comprise registered local users and registered remote users and other clients.

According to some embodiments, the system 100 comprises a feedback channel 143 which is separate from the communication channel used for transferring the control parameters to the plant machinery database. For example, the first and second sub-moules of the security interface may respectively comprise a function to report if a processed request was accepted or rejected. Preferably, the reason of rejection (e.g. failure to authenticate, implausible control parameters, etc.) and/or status information of the machines are not communicated to the client.

According to some embodiments, the first sub-module of the security interface, and optionally further components of the L3 IT infrastructure of the system, and the second sub-module of the security interface, and optionally further components of the L2 level of the IT infrastructure system, are instantiated within different virtual machines operated by different virtual machine hosts. The virtual machines may be containers, e.g. Docker containers operated by different container management systems. This may increase security and robustness of the system, because the sensitive L2 layer is isolated and protected from the L3 level and from any non-trusted entity having managed to infiltrate the L3 level.

According to preferred embodiments, the system is configured to process requests with a pre-defined sequence of processing steps: the system accepts requests from untrusted sources such as remote clients 106, 107, 108, 110.

At first, the client having submitted the request has to successfully authenticate at the service interface 120, e.g. by providing one or more credentials such as a signed certificate, a secret shared with the security interface, biometric data, a password, occurrence on a whitelist, or combinations thereof to the ID-provider 135. Only if the client was able to authenticate itself as a trustworthy entity at the ID-provider, the service interface will forward the request to the security interface, in this case, to the first sub-moule 122 of the security interface 142. According to embodiments, the authentication of the entity at the service interface comprises checking the integrity of the request, e.g. by means of a signature verification, a checksum verification, etc.

The security interface, here e.g. the security interface sub-module 122, verifies the request, e.g. by performing various plausibility and/or safety checks of control parameters comprised in the request, whereby these checks are preferably based on global, not machine specific (machine agnostic) rules. For example, some rules may analyze if a control parameter is acceptable given a current weather condition such as environmental temperature or humidity. The request verification may comprise checking if the parameter value of a given control parameter is specified in the correct data type (e.g. integer, String, Boolean, etc.). The verification may comprise checking if the request to modify a particular control parameter was received no more than a maximum allowed frequency, e.g. to protect the system against denial of service attacks. Only in case the verification returned that the request is valid (the control parameters are plausible and safe), the sub-module 122 forwards the control parameters to the automation system side sub-module 124 of the security interface 142. In addition, or alternatively, the security interface may check if this request in combination with a predefined number of previously received requests have modified a particular control parameter such that a maximum acceptable variability threshold is exceeded. If the variability is too high, this may indicate that the entity having submitted the request is not familiar with the respective machine or that multiple users try to steer the manufacturing process in different directions.

According to some embodiments, request verification by the security interface also comprises checking if the client having submitted the request has the necessary permissions to modify a particular control parameter. For example, if a remote user 148 is not allowed to modify the temperature of a particular tank, the request of this user to modify the temperature of this tank will be considered invalid. In addition, or alternatively, the verification request may comprise a simulation of a future state of the one or more machines which would be affected by the control parameter change. The request is considered invalid if the simulated future state would violate a constraint, e.g. would be associated with a product of low quality or a production process considered to be unsafe.

The sub-module 124 verifies the forwarded control parameters, e.g. by performing various further plausibility and/or safety checks, whereby these checks preferably comprise executing machine specific and/or plant-specific rules. Only in case the verification returned that the request is valid (the control parameters are plausible and safe), the sub-module 124 forwards the control parameters to a database service interface configured to store the control parameters comprised in the request in the plant machinery database 128.

According to embodiments, the request verification performed by the security interface may be used for determining if the control parameters specified in the request are reasonable, achievable, acceptable, and safe for the plant and its machines. The verification entails that the security interface has at least a coarse-grained knowledge of the processes executed by the machines during the manufacturing process. For example, if the request specifies a request to decrease the temperature of a reaction tank by 10°K, the security interface has to check how this change affects specific machines and control signals and if any safety parameter ranges would be exceeded as a consequence of the temperature decrease.

According to some embodiments, the security interface is further configured to execute a mapping of the control parameters specified in the request. In particular, if the security interface is a distributed security interface, the control-system part of the security interface can implement the mapping process. During the mapping, the security interface determines how a specified parameter change affects other control signal threshold and machine settings, which may also be represented and controlled by a respective control parameter in the plant machinery database. For example, in order to realize a temperature decrease by 10°K in the tank, it may be necessary to reduce the activity of a heating element and/or to increase the activity of a cooling element. It may also be necessary to increase the stirring speed to compensate for an increased viscosity of a fluid comprised in the tank. During the mapping, one or more further control parameters whose value depends on the value of one of the control parameters specified in the request are determined. Also, the parameter values of the further control parameters which are desirable after the value of the one control parameters was changed are determined (e.g. a desirable stirring speed, cooling rate and/or heating strength).

Preferably, also the further control parameters identified during the mapping step are verified, i.e., they are checked for being achievable, plausible and/or safe. If a mapped parameter does not pass the verification, the whole request may be rejected and the control parameters in the request will not be stored in the database 128.

After the control parameters have been successfully verified, mapped and the mapped parameters also successfully verified, the mapped parameters are transferred together with the control parameters originally comprised in the request to the database service interface 126 and are finally stored in the plant machinery database 128.

After having completed the mapping step, the control parameters in the request and the additional control parameters identified during the mapping are stored in the plant machinery database.

According to preferred embodiments, the security interface is configured to generate an acceptance request after the request has been successfully verified. The acceptance request is a request configured to prompt a user 146 operating locally at the plant, or software included in the security interface (not shown), to accept the requested change to one or more of the control parameters stored in the plant machinery database. For example, the acceptance request may be displayed or otherwise output to the local user 146 via a local operating user interface, such as a display included in or coupled to one of the machines 140 of the plant. The acceptance check may be the final step of the request verification performed by the security interface. For example, if the security interface is a distributed interface, the acceptance check may be performed by the security interface submodule 124. Only if the local user 146 or the software included in the security interface accepts the proposed control parameter settings will the local user/software send an acceptance message to the security module. The request is considered successfully verified (valid) only if the local user or software has accepted the proposed changes. Otherwise, the request is considered invalid and the control parameters it contains are not stored. For example, a request from a remote user 108 to reduce the temperature in a reaction tank may trigger the creation of an acceptance request which is displayed to a local operator 146 via a display of that reaction tank. The local operator may have a better perception of the overall manufacturing process and/or important status parameters of the tank than the remote user. To increase safety, the local operator 146 must confirm the new control parameters, e.g. by clicking an "OK" button displayed on a screen 125. If the operator does not accept the proposed parameter changes, the safety interface will not forward the control parameters to the machinery database 126. For example, the security interface may determine that a request is invalid if no acceptance message has been received from the local operator 146 within a predefined timeout interval.

If the valid request was confirmed by the local user 146, the security interface sub-module will store the respective control parameter in the plant machinery database.

In other embodiments, the security interface may not be implemented as multi-modular, distributed system and may either be completely part of the L2 level or the L3 level IT infrastructure (and respective virtual machines).

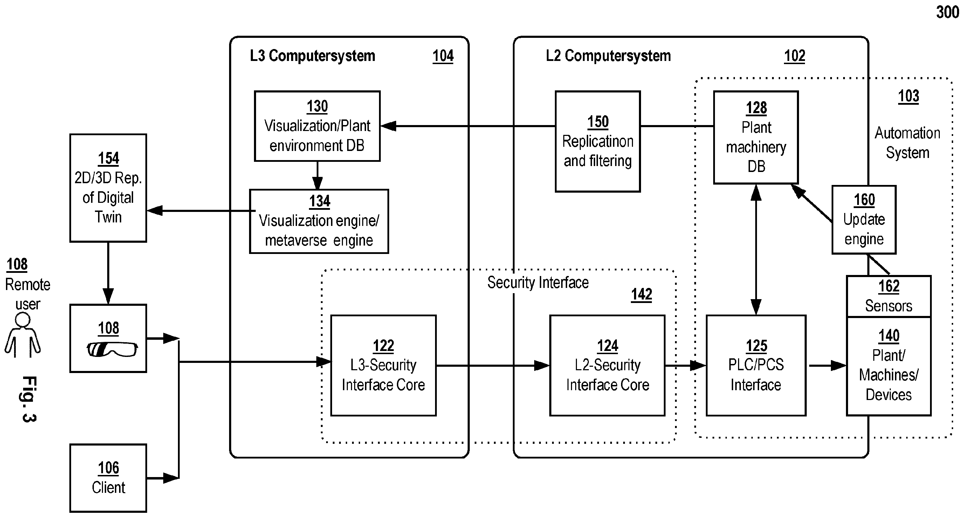

Figure 3 illustrates a block diagram of a system 300 for monitoring a manufacturing plant. The system comprises an automation system 103 including a plurality of machines 140 of the manufacturing plant and a plant machinery database 128. The plant machinery database comprises control parameters for the machines and comprises spatial information and/or status information of physical objects (the machines and/or objects processed by the machines).

The automation system is configured for the automatic operation of the machines in accordance with the control parameters in the plant machinery database. For example, the automation system may comprise PLC and/or PCS interfaces 125 to enable local operators and/or a safety interface 142 to operate the machines via these interfaces 142.

The system further comprises an update engine 160. The update engine is software configured to continuously (e.g. at least once per hour, or at least once per minute, or at least once per second) receive spatial information and/or status information of the physical objects from a plurality of sensors 162 during an ongoing manufacturing process and to update the machinery database 128 with the received information. For example, the sensors may include temperature sensors, humidity sensors, pH meters, internal machinery sensors configured to determine the state or mode of operation of a machine (e.g., rotational speed of centrifuges or agitators, speed of conveyor belts, open-closed state of doors and other openings, etc.).

The system further comprises a visualization database 130 comprising a subset of the data of the plant machinery database.

The system 300 further comprises a replication module 150. A replication module is software configured to continuously (e.g. at least once every hour, or at least once every minute or at least once every second) select data which enables generation of a digital visual representation of the one or more physical objects from the data of the plant machinery database, whereby the selected data is free of the control parameters, and to replicate only the selected data to the visualization database. Hence, the replication module may be considered to filter the data content of the plant machinery database such that only a selected sub-set of the data is replicated to the visualization database 130. For example, the visualization database may comprise 2D or 3D models of the machines and/or objects processed by the machines. The models can be static models or can be dynamic models which can be used to visualize the state of the machine or the state of a manufacturing workflow. In addition, the visualization database may comprise spatial information of the objects, e.g. the current orientation of robots and other machines or machine parts, the position of educts or products within a production line, etc. Preferably, the spatial information does not comprise information which would allow identifying the exact geographical position of the respective physical object. The 2D or 3D models of at least some of the machines are not to scale and/or are coarse-grained abstractions of the machines. This may allow protecting know-how related to the structural design of the machines and other sensitive information, e.g. the total/maximum production capacity of a plant, a machine or a production line.

The system further compresses a visualization engine 134. The visualization engine is a software program, e.g. a monolithic software application or a set of interoperable software programs configured to generate a digital visual representation of the one or more physical objects as a function of the data in the visualization database. The visualization engine preferably does not have access to the plant machinery database and rather uses the sub-set of data replicated by the replication module to the visualization database as basis for generating a visual representation of one or more physical objects involved in the manufacturing process of the plant, in particular of the machines involved in the process and/or objects processed by the machines.

In some examples, the replication module 150 may use a streaming protocol for streaming database updates of the plant machinery database 128 continuously to the visualization database 130. For example, Apache Kafka may be used for creating and transferring a stream of measurement values which are continuously stored in the plant machinery database to the visualization database. The measured parameter values can be indicative of the orientation or state of one or more of the machines and/or of the result of a previously executed control command having provided new configuration data via a request. By streaming the measurement parameter values to the visualization database, they are made accessible to the visualization engine.

The visualization engine is interoperable with one or more client software programs running on respective client devices comprising a display device 154, 108. The client software receives the visual representation of the physical objects from the visualization engines and causes the respective display device to display the visual representation of the one or more physical objects to a user. Thereby, the user is enabled to monitor the manufacturing process without disclosing sensitive control parameters or other sensitive data and know how to the user.

For example, the client software interoperating with the visualization engine can be a software configured to display the visual representations on a 2D screen, e.g. a screen of a smartphone or a notebook or a desktop computer. This may allow remote users to monitor the production process via standard devices without requiring the user to use special-purpose equipment such as VR glasses.

According to another example, the client software interoperating with the visualization engine can be a VR software (virtual reality software) configured to display the visual representations via VR glasses of the user 108, thereby giving the user an immersive impression of being located in spatial proximity of the physical objects represented by their visual representations although the user may be far away from the plant.

According to another example, the client software interoperating with the visualization engine can be an AR software (augmented reality software) configured to display the visual representations via AR glasses worn by a local user 146 operating at the plant., thereby giving the user additional information which may be useful for operating or maintaining machines of the plant. For example, the system 300 may further comprise a security interface 142 configured to receive and verify requests to operate one or more of the machines from a remote client 106, 107, 108. The security interface may be configured to prompt a local user 146 to accept the requested operation via a visual object generated by the visualization engine and displayed via the AR glasses of the local user. For example, the visual object can be a menu which describes the requested action and/or the identity or role of the requesting user, whereby the menu comprises one or more selectable items, e.g. buttons, allowing the local user to accept or deny the requested operation. In addition, or alternatively, the visualization engine in interoperation with the AR software may cause the AR glasses to display menus, texts, videos or other types of data related to the machines or the manufacturing process. For example, the data may comprise instructions per text or video on how to operate or maintain a machine, may comprise a GUI enabling the local user to enter configuration data locally, or may comprise alarms or error messages.

The remote user wearing the VR glasses for remotely monitoring the manufacturing process may be the user having submitted the request. However, the request may likewise have been submitted by another remote user or a remote client software and the user 108 wearing the VR glasses may merely monitor the process.

According to embodiments, the visualization database 130 comprises for at least one of the machines two or more different, user-role specific models of the machine. The visualization engine is configured to identify the role of the remote user wearing the VR-glasses, to identify the one of the models assigned to this role, and to use the identified model for generating the visual representation of the machine. The different models may differ from each other with respect to the degree of structural details or status information disclosed in the model. This allows to provide a flexible and fine-grained control of the level of detail a remote user is able to see.

The security interface 142 and its interoperation with the clients, the PLC/PCS interface 125 and the machines 140 may be implemented as described herein already for other embodiments and examples. However, the security interface is optional and the plant machinery database 128, the visualization database 130, the visualization engine 134, the update engine 160 and the replication module 150 may also be used in computer systems for monitoring and/or operating a manufacturing process which do not comprise these optional components. Using the database replication mechanism as described herein in combination with the security interface may have the advantage of providing a highly secure system for monitoring and controlling an automated manufacturing process remotely: there exists only a unidirectional communication channel for transferring control parameters from a remote client to the machines, and a further unidirectional path for providing visual feedback to remote users which ensures that the remote user is not able to access or see sensitive control parameters or know how as he or she only sees pre-defined and typically simplified visual representations of the real world objects in the form of digital twins.

Figure 4A shows an example 400 of a GUI 144 that enables a user 146, e.g. a local user, to monitor and/or control the status of a manufacturing process. As the status information may reveal sensitive data of the manufacturing process, the GUI 400 may only be accessible from within the automation system/plant and not by a remote user.

In the illustrated example, a remote user or edge computer system may have requested that the "target bulk density" control parameter 402 be set to a value of 115,000 g/l. During a mapping operation performed by the security interface, the security interface may have calculated additional control parameter values for the temperature 408 and pressure 406 parameters. For example, the manufacturing process may be a chemical synthesis and the security interface may comprise a predictive model configured to predict a temperature value and a pressure value that are likely to provide the substance at (at least approximately) the desired bulk density. The predicted bulk density 404 and the predicted temperature and pressure of the respective reaction vessel may be calculated during the parameter mapping step and may be passed by the security interface to the database service interface and stored in the plant machine database. One or more of the machines 140 of the plant, e.g. a local computer, may be configured to read said parameters from the plant machinery database and generate a GUI displaying the parameter values (target bulk density specified by the requesting entity and the bulk density and temperature and pressure predicted by the service interface).

The local user can select whether the machine parameters, pressure and temperature, should be set manually or automatically to achieve a given target bulk density of a substance to be produced by the manufacturing plant. When the machine control value is set to "automode" as shown in Figure 4A, the control parameters predicted by the safety interface are automatically set and used as the basis for controlling the synthesis process and process conditions. Prediction is preferably performed at the L2 level of the safety interface. As a result, the automatically calculated parameter values, e.g. 8.48 bar and 37°C, are automatically set and can be continuously updated during the ongoing manufacturing process.

According to some embodiments, the local operator 146 must select "automode" or "manual" at least once to start the synthesis process. By selecting "automode", the local operator sends an acceptance message to the security interface indicating that the local operator considers the specified control parameters, in particular the temperature and pressure, to be safe and appropriate.

Figure 4B shows another example 410 of a GUI 144 that enables a local user to monitor and/or control a manufacturing process. In the GUI 410 shown, which corresponds to the GUI 400 shown in Figure 4A, the machine control value has been set to "manual" by the local user. As a result, the local user has the ability to edit the values calculated by the safety interface, thereby overriding any control parameters that are deemed unsafe, unachievable or otherwise problematic.

Figure 5 shows a distributed system 500 for controlling manufacturing processes in multiple plants.

A user 108 who may work at plant A and is hence remote to plant B may wear VR glasses. Via the VR glasses, the user 108 can see videos and/or images acquired by a camera placed in plant B. For example, the camera may be attached to a movable robot 510 whose movement and/or position can be controlled by the remote operator 108. Hence, the remote operator via his VR glasses sees what the robot 510 sees when it moves through plant B. The image and/or video data may be transmitted from the robot 510 via a database replication module and visualization engine as illustrated in figure 3 to the remote user. At least some of the machines or physical objects processed by the machines are graphically represented in the form of visual digital twins as part of a "virtual reality" via the VR glasses to the remote user. When the user tries to monitor the operation of one of the machines 140 of the plant, e.g., wants to cause the robot 510 to turn left, the user 108 may simply turn his body to the left. Sensors in the VR glasses will recognize the change in position and/or orientation and send the new position and orientation and/or a command to turn left in the form of a request to control the robot such that the robot turns left. The request to move the robot is transferred to the robot via the security interface 142 as described herein for embodiments and examples. For example, the forwarding of the request from L3 to L2 may involve authenticating the remote user 108, verifying the request, mapping the control parameters, verifying the mapped control parameters and storing the new position or a movement specification in the database 128. The robot 510 as well as the other machines 140 is configured to repeatedly read control parameters from the database 128 and adjust its position and/or actions performed accordingly.

The current position and/or orientation of one or more of the machines 140 including the robot may be continuously sensed and stored in the plant machinery database 128 and the acquired positional data may be used to continuously update the database 128. At least some of the data being indicative of the position and/or location of the robot is replicated to a plant environment database 130 which is used as data basis of the visualization engine to generate and display a continuously updated visual representation of the robot and/or other machines 140 of the plant to the remote user.

In some embodiments as the depicted embodiment, the visualization engine 134 can be configured to create an avatar 505 being a virtual representation (or "twin") of the remote user 108. The avatar can be displayed to one or more local operators 146 who operate at the plant B and wear AR glasses. Hence, the local operator 504 sees the digital twin of the remote user via his or her AR glasses.

The user 146 may wear AR glasses, meaning that the user 146 can still see the real machines 140 of plant B. However, some virtual objects, including the avatar 505, are displayed in the AR glasses as an overlay to the "real world" which is still visible through the AR glasses. Hence, the user 146 perceives a realistic impression the remote user 108 would actually be present at the premises of plant B, because he sees the avatar move and/or hears the avatar speak via the AR glasses. The impression of the Avatar and other virtual objects via the AR glasses of the user 146 may be generated by an augmented reality application 504 installed locally in the IT infrastructure of plant B. In addition, the IT infrastructure of plant B may comprise a virtual reality application 506 configured to interoperate via the visualization engine 134 with virtual reality applications 524 installed locally in the IT infrastructure of other plants, e.g., plant A. Thereby, operators of different plants may share a common virtual reality, which may be useful for users operating in different countries who want to discuss manufacturing related issues without having to meet physically.

The visualization engine may be configured to align virtual objects such as avatars, virtual user menus, instruction manuals or videos or the like, with the coordinate system of the virtual reality and with the coordinate system of the "real world". The visualization engine has access to a global object representation layer, so any virtual object, e.g., an instruction manual of a machine, can be seen by all users wearing VR glasses or AR glasses and being registered at the visualization engine.

The remote user 108 may not only control some manufacturing tasks of plant B remotely, but also some manufacturing tasks of plant A. For example, user 108 may usually be a local operator at plant A, but may desire to control the task from home remotely. In this case, the user 108 is also a remote user for the system for controlling manufacturing of plant A.

The remote control of one or more machines 526, 528, 530, 532 and/or 534 by user 108 via the security interface sub-modules 542, 544 may be implemented as described already with respect to the other figures, e.g. figures 1, 2 and/or 3. The service interfaces 540, 120 may be based on a REST API, may involve Streaming applications such as Apache Kafka an may use the MQTT or a WebSocket protocol for forwarding requests.

At the L3 level, the security interface sub-modules 542, 122 comprise or have access to rules and/or object representations related to objects of the manufacturing site, cluster or plant level which are typically machine-agnostic. These rules and object representations may be used for verifying requests in the L3 level.

At the L2 level (automation system level), the security interface sub-modules 544, 124 comprise or have access to rules and/or object representations related to objects of the plant, line or machine level. These rules and object representations may be used for verifying requests in the automation system/L2 layer.

Embodiments of the invention enable a user 108 being remote to the machines of multiple plants to control these machines without imposing a security risk on the plants.

Figure 6 illustrates a system 600 configured to display various virtual objects in a location-dependent manner via the AR glasses to a user wearing AR glasses and having an "operator" role. For example, the operator may wear the AR glasses and look at real physical objects, e.g., machines of the plants or objects processed by the machines. The task instructions A1-A6 are shown by the AR glasses at predefined x/y/z coordinates in a coordinate system of the augmented reality which is aligned to the coordinate system of the real world. For example, the AR glasses may use the xy coordinates of a machine like the dosing unit, the transport and heating unit or the packaging unit for displaying the respective instruction manuals or videos at a predefined distance relative to the real-world positions of the real-world objects.

For example, the user wearing the glasses may have a registered user account in a user database of the visualization engine and/or of the ID-provider 135 and his or her user ID is associated with one or more user roles, in this case, the "operator" role. In addition, or alternatively, each user role may optionally include one or more user privileges.

Thus, the visualization engine is configured to select content of the received data (e.g., "filter" content of the received task instructions) to be displayed based upon the one or more user roles and/or the one or more user privileges associated with the user ID. For example, the one or more user roles includes, by way of non-limiting exemplary embodiments only, an operator role, a maintenance role, an engineering role, an administrative role, a guest role. The one or more user privileges and/or roles limits and determines what virtual objects/what information will be displayed through the AR glasses. For example, a user privilege for an engineering role may define which ones of the machines in the plant the user associated with the user ID having the role of engineer is accessible to the user, in the sense of viewing data that corresponds to the machines through display of the respective task instructions. A user associated with a user ID may have more than one role and more than one user privilege.

In the example depicted in Figure 6, the user wearing the AR glasses has assigned the "operator" role. As a consequence, the executable program logic causes the AR glasses to display the view 600 where the user sees an instruction manual A1 on how to clean a filter when approaching the dosing unit and may further see additional task instructions and respective instruction videos A2, A3. When the user approaches the transport and heating unit, he or she will see the task instructions A7 via the AR glasses. Likewise, he or she will see task instructions A4-A6 when approaching the packaging machines. The tasks A1-A7 relate to standard tasks which have to be performed in normal operation mode of the industrial plant.

Figure 7 illustrates a system 700 configured to display various virtual objects in a location-dependent manner via the AR glasses to a user having assigned the role "maintenance worker". When the maintenance worker wears AR glasses and looks at the real machines, he or she will see task instructions related to maintenance rather than operational tasks. For example, the user will see task instructions B1 for changing a defect pressure sensor 1234 when approaching the dosing unit and/or will see instructions B2 on how to inspect the heater when approaching the transport and heating unit.

Figure 8 illustrates a system 800 of a manufacturing plant making use of spatial anchors and showing an avatar of a remote user 108 at the plant to be controlled.

A remote human operator 108 may be an expert for maintaining one or more machines of the plant, e.g., a complex machine 808. The machine and a local operator 146 are both located at an industrial plant B in country B. The remote user 108 is located in a different place, e.g., in plant A in country A. The remote user 108 wears VR glasses operably coupled to a virtual reality application 524 ("VR-application"). The VR-application is interoperable with the AR-application 504 operably coupled to AR glasses worn by the local operator 146. The VR-application 524 and the AR-application 504 can be connected to each other via a visualization engine configured to spatially align virtual objects of the virtual reality and of the augmented reality with each other. The AR application enables the remote user to support the local colleagues 146 in various operational and/or maintenance tasks to be executed locally with or at the machine 808. The AR application is configured to create an avatar 505 for the remote user and position the avatar at a defined position, e.g., at a position proximate to the machine 808 where the support of the user 108 is needed.

According to preferred embodiments, the VR application 524 is configured to generate a virtual reality for the remote user 108 which enables the remote user to see the local user 146 and/or other real-world objects of the industrial plant, e.g., machine 808, as they would be perceived from the perspective of the avatar 505. For example, the remote user can see the live values of the production line and the machine through a robot equipped with a camera and/or further sensors positioned at the same position and orientation as his avatar 505. For example, the robot can be the robot 510 described with reference to figure 5. In some examples, plants A and B and their respective IT-infrastructure can be operated as described with reference to figure 5.

In some embodiments, the robot is remotely controlled by the remote user 108 and enables the remote user to perform defined operations by the robot. The avatar has a defined position in the 3D environment generated by the AR application 504 and displayed via the AR glasses to the local user 146. Also, the local human user 146 (AR user) and the machine 808 have defined positions within the 3D environment used as the coordinate system of the augmented reality ("mixed reality").

The AR application 504 in interoperation with the visualization engine is configured to ensure that the VR coordinate system seen by the remote user and the AR coordinate system seen by the local user 146 via the AR glasses have the same coordinate system as a basis for positioning of virtual objects (avatars, holograms, GUIs, etc.). The AR application 504 as well as the VR application 524 receive position information of the virtual objects to be displayed in the augmented/virtual reality from the same global object representation layer 503. According to some embodiments, the VR application program 524 of the remote user 108 generates a virtual reality ("manufacturing metaverse") within which an avatar of the local human operator 146 is shown in a defined optical representation (e.g., only a name, or even a 3D avatar shape), so that the remote user can see the local user within the VR app (not shown). Vice versa, the local user (AR user) 146 can see the avatar 505 of the remote user 108 as a hologram (e.g., only as a name or as a 3D avatar shape) within the "manufacturing metaverse" presented as augmented reality to the local user 146 via the AR glasses 804.

According to embodiments, the AR glasses 804 comprise a microphone 810 and an acoustic output interface 812, e.g., speakers providing a user interface to the local user. Likewise, the VR application 524 can comprise a user interface including a microphone and an acoustic output interface for enabling the remote user 108 to interact with the VR application. The AR application program 504 operatively coupled to the AR glasses of the local user interoperates with the VR application such that the remote user 108 and the local user 146 can talk to each other. Preferably, the AR application uses the positional information of the local user and of the avatar of the remote user in the shared coordinate system to control the volume of the acoustic output interface of the AR glasses: the closer the local user 146 to the avatar 505, the greater the volume. Likewise, the sensitivity of the microphone may be adapted as a function of the distance of the two users in the shared coordinate system: the larger the distance, the less sensitive the microphone.

The AR system according to the depicted embodiment comprising the AR application and the VR application hence allows the two users to collaborate using a shared coordinate system also referred to as "manufacturing metaverse". The manufacturing metaverse consists of a virtual coordinate system shared by all users and AR objects in the metaverse, whereby this virtual coordinate system is mapped to and presented as an overlay to real-world objects 808 of the industrial plant. This enables the experienced, remote user to experience the same or a similar visual context like the guided local user.

According to a first scenario, a thermoplastic urethane (TPU) production is taking place at plant B. The production line was modified to adapt the line for a new product which was never produced by this production line before. The remote operator is an expert for this kind of production and lives a location A (plant A, country A). The remote user will guide the local operators with regard to when valves should be checked and which ones. The remote user will also notify the local user of important things the local user should care of in order to ensure proper and smooth production. Furthermore, the remote user may guide the local user for proper operation steps in the right situation and at the right moment.

According to a second scenario, the TPU production is already taking place at location B. For the night shift time, the work coordinator for that night shift became ill. An experienced human operator at the remote location A (plant A, country A, other time zone) can support during dayshift for the production of location B. He will use his avatar for direct collaboration with the one or more local human operators. The remote user can coordinate the work for local workers by creating processes/tasks which can be carried out by the local users (AR user).

According to a third scenario, an autonomous TPU production is taking place at plant B. Under normal/standard conditions, the line can run completely autonomous. Manual operation is only needed in case something unforeseen happens. This supervision job will be done via manufacturing metaverse with the VR application from remote. One or more robots are coordinated and triggered by the remote human operator by creating/using the right processes/tasks for the robot(s). In case the remote human operator needs to see a real picture and/or video stream of the local situation, the remote user is enabled via the VR application and an AR application associated with a control program of a robot to move to the machines of interest. The robot is equipped with a camera and is controlled to take the same position and direction as the position of the remote user's avatar. When the robot has reached this position, the camera of the robot is caused to take images and/or videos of the machines in front of the avatar/robot and transfer the images or videos to the VR application. The remote user will see the images and/or videos via the virtual reality created by the VR application. As the robot is controlled to take the images and/or videos from the same position and orientation as the remote user's avatar in the mixed-reality coordinate system at the industrial plant, the photos and images will show the machines of interest from the same perspective a local human operator would have at the said position and orientation.

Embodiments of the invention may be used for many other scenarios and industries. For example, embodiments of the invention may be used in the car manufacturing industry and allow experienced engineers to support colleagues working at other sites of the car manufacturing company.

Likewise, the system for automated production control and/or for graphically representing an ongoing manufacturing process via VR glasses, AR glasses or other display types based on a visualization engine may be used in the chemical industry or any other type of industry where physical objects are processed to manufacture one or more products.

In some use case scenarios, the robot is not only used for acquiring images or videos but can also be used for fixing a problem under the control of the remote user. For example, robots may be used for performing maintenance tasks at locations which are dangerous for human operators, e.g., in the context of chemical synthesis pathways involving toxic chemicals, or in the context of tasks to be executed in an environment which is contaminated or at risk to be contaminated with radioactive substances or toxic chemicals.

According to some embodiments, spatial anchors are used for positioning virtual objects at a defined position and orientation relative to real world objects such as machine 808. For example, it may be desirable to display a GUI-hologram enabling the user to monitor and control the machine 808 at a distance of about 40 cm in front of the machine.

In order to ensure that the local user 146 will see the GUI-hologram always at this defined position in the augmented reality irrespective of the current position of the user 108, the AR application generates and display the GUI hologram at the spatial anchor or at a defined distance relative to the spatial anchor. According to some embodiments, the spatial anchors (i.e., at least an anchor-ID and anchor coordinates) are stored in the database system such that they are accessible to the VR-application 524. The VR application is configured to read the stored spatial anchors and to generate and display the same virtual object, e.g., the GUI hologram for machine 708, at said spatial anchor or at aid defined distance relative to the spatial anchor.

According to some embodiment, spatial anchors are defined and created by placing machine-readable codes, e.g., QR codes 811, 813, 814 at various places within the industrial plant. The AR glasses may comprise a camera which acquires digital images of the machine-readable codes, extracts an anchor-ID encoded therein, creates an anchor having the coordinates of the machine-readable code within the real-world coordinate system, and stores these anchors in the database system. Alternatively, the user 146 may create a spatial anchor by performing an anchor-creation gesture at a desired position in the real world. This gesture is captured by a camera of the AR glasses and a spatial anchor is created and stored by the visualization engine analogously. The anchor-ID may be crated automatically upon the creation of the spatial anchor.

Figure 9 illustrates a coordinate system 900 that can be used by the visualization engine and the VR application 524 for representing of real-world objects, and local user avatars in a virtual metaverse to a remote operator 108. The VR application 524 generates a virtual representation 908 of real-world machine 808 of the industrial plant and displays the virtual representations to a remote user 108 via a virtual reality display technique. The coordinate system 900 of this virtual reality may further comprise virtual representations 904, e.g., avatars, of local user 146 operating in spatial proximity to the real-world objects 808. The distances of the virtual representations 908, 904 of the machine 808 and the local user 146 within coordinate system 900 correspond to and reflects the real distances of the real-world objects. The coordinate system 900 can comprise a spatial mesh which is aligned with the "real world" objects such as the machine 808 and local user 146 at the industrial plant. The mesh may also be aligned with the respective virtual representations 908, 904 (digital twins) of the real-world objects. In addition, the remote user 108 may be represented in this coordinate system 900 as a virtual entity, e.g., an avatar 505 which can be seen by the local user 146 via the AR glasses 804. Figure 9 shows the coordinate system shared by the virtual reality generated by the VR application and the AR reality generated by the AR application, but preferably the remote user 108 sees the virtual objects representing real objects and other users in the coordinate system 900 from the perspective (position and orientation) of his avatar 505.

Figure 10 illustrates a flowchart of a method for automating processes of a manufacturing plant. The method comprises providing 602 a system 100, 200, 300, 500 for process automation of the manufacturing plant as described herein for various example implementations. The system may comprise a plurality of machines 140, 536 of the manufacturing plant, a plant machinery database 128, 548 comprising control parameters for the machines, an automation system 103 for automatically operating the machines of the manufacturing plant in accordance with the control parameters in the plant machinery database, and a security interface 142. The method further comprises receiving 604 a request via a network from a client and verifying 604 the request by the security interface. In the event that the security interface determines that the request is valid, the security interface stores 608 control parameters 402-408 comprised in or derived from the request in the plant machinery database. The automation system automatically operates 610 the machines in accordance with the stored control parameters comprised in or derived from the valid request. In the event that the security interface determines that the request is not valid, the security interface returns 612 via the feedback channel a message to the client that the request was not executed.

### List of reference numerals

- 100: system for process automation
- 102: automation system (L2)
- 103: automation system
- 104: control system (L3)
- 106: client: computer system
- 107: client: advanced process control software
- 108: client: remote user with VR glasses
- 110: client: edge computer system
- 114: firewall
- 116: firewall
- 120: service interface
- 121: service interface
- 122: sub-module of security interface
- 123: configuration GUI for rules 137
- 124: sub-module of security interface
- 125: PLC/PCS interface to the machines
- 128: plant machinery database
- 130: plant environment database
- 132: rules
- 133: configuration GUI for rules 132
- 134: visualization engine
- 137: rules
- 135: ID-Provider
- 140: manufacturing assets of an entity (e.g. plant, production line or unit, machines, devices
- 141: task engine
- 142: security interface
- 143: feedback channel
- 144: task engine
- 146: local user
- 150: replication module
- 154: 2D/3D representation of physical objects/machines
- 200: system for process automation
- 202: Admin
- 214: local operator
- 400: GUI
- 402: control parameter "target bulk density"
- 404: computed further control parameter
- 406: computed further control parameter
- 408: computed further control parameter
- 410: GUI
- 500: system
- 501: L3 IT-infrastructure system
- 502: global object representation layer
- 503: L2 IT-infrastructure system
- 504: local AR application of plant B
- 505: avatar
- 506: local VR application of plant B
- 508: local web application of plant B
- 510: robot controlled by remote user
- 512-518: machines/devices
- 520: local web application of plant A
- 522: local AR application of plant A
- 524: local VR application of plant A
- 540: service interface
- 542: security interface sub-module
- 544: security interface sub-module
- 546: database service interface
- 548: configuration database
- 526: robot
- 528-534: machines/devices
- 552: L2 IT-infrastructure system
- 554: L3 IT-infrastructure system
- 600: system
- 602-612: steps
- 700: system
- 800: system
- 804: AR glasses
- 808: machine/device
- 810: microphone
- 811: QR code
- 812: acoustic output interface
- 813: QR code
- 814: QR code
- 900: coordinate system
- 908: digital twin of machine 808
- 904: digital twin of user 146

## Claims

1. A system (100, 200, 300, 500) for process automation of a manufacturing plant, comprising:
- a plurality of machines (140, 536) of the manufacturing plant,
- a plant machinery database (128, 548) comprising control parameters for the machines;
- an automation system (103) for automatically operating the machines of the manufacturing plant in accordance with the control parameters in the plant machinery database;
- a security interface (142) configured for:
∘ receiving a request,
∘ verifying the request partially by means of comparison values from either the plant environment database or the plant machinery database,
∘ in response to determining that the request is valid, storing control parameters (402-408) comprised in or derived from the request in the plant machinery database or the PLC/PCS interface to the machines directly;
- wherein the automation system is configured to perform the automatic operation of the machines in accordance with the stored control parameters comprised in or derived from the valid request.

2. The system of claim 1, wherein the security interface is configured to enable a uni-directional transfer of at least the control parameters to the automation system via a control communication channel and is configured not to transfer any machine-related control parameters or status information back to a client (106, 107, 108, 110, 504, 506, 508) having submitted the request.

3. The system of any one of the previous claims, wherein the system comprises a client (106, 107, 108, 110, 504, 506, 508) configured to generate the request and submit it to the security interface.

4. The system of claim 3, wherein the client comprises a client software, wherein
- the client software is configured to repeatedly, in particular at a frequency of at least once per hour, preferably at least once in a minute, preferably at least once in a second, and in some embodiments at least once in 0.10 seconds, generate a request and submit it to the security interface, wherein the request comprises one or more control parameters for controlling the operation of one or more of the machines; and/or
- wherein the client software is configure to repeatedly predict one or more control parameter values which are optimal for or suitable for controlling the operation of one or more of the machines such that at least one feature of an automated production process performed by one or more of the machines is optimized, and to automatically and repeatedly submit a request comprising the one or more predicted control parameters to the security interface, wherein in particular the prediction of the control parameter values comprises simulating the automated production process and the operation of the one or more of the machines involved in the same.

5. The system of any one of the previous claims, wherein the verification of the request is performed by the security interface repeatedly, it particular at a frequency of at least once per hour, preferably at least once in a minute, preferably at least once in a second, and in some embodiments at least once in 0.10 seconds.

6. The system of any one of the previous claims, wherein the verifying of the request comprises performing a plausibility check, the plausibility check comprising checking if the control parameters comprised in or derived from the request fulfills one or more criteria selected from a group comprising:
- the value of the control parameter is achievable by the one or more of the machines to be operated in accordance with the stored control parameters; and/or
- the value of the control parameter is safe for the one or more of the machines to be operated in accordance with the stored control parameters; and/or
- the value of the control parameter is suitable for providing a manufactured product meeting a quality criterium.

7. The system of any one of the previous claims, wherein the system comprises a service interface (120, 540), wherein the service interface is configured to receive the request from a client (106, 107, 108, 110, 504, 506, 508) and to forward it to the security interface, wherein the security interface is configured to accept and process requests only if received from the service interface.

8. The system of claim 7, wherein the system comprises an ID-provider module (135) operatively coupled to the service interface, wherein the service interface is configured for:
- receiving the request from at least one client (106, 107, 108, 110, 504, 506, 508),
- authenticating the at least one client,
- in response to the at least one client having successfully authenticated at the service interface, forwarding the request to the security interface;
- in response to the at least one client having failed to authenticate at the service interface, not forwarding the request to the security interface.

9. The system of any one of the previous claims, wherein the security interface is configured for:
- identifying one or more further control parameters whose values depend on values of one or more of the control parameters specified in or derived from the request; and
- replacing the at least one control parameter comprised in or derived from the request by the identified one or more further control parameters and/or supplementing the control parameters comprised in or derived from the request with the identified one or more further control parameters;
wherein the identified one or more further control parameters are stored in the plant machinery database for controlling the operation of one or more of the machines.

10. The system of any one of the previous claims, wherein the security interface comprises at least:
- a first sub-module (122, 542) configured to perform a first part of the verifying of the request, the first part of the verification using generic, non-machine-specific and nonplant-specific rules;
- a second sub-module (124, 544) configured to perform a second part of the verifying of the request, the second part of the verification using machine-specific and/or plant-specific rules.

11. The system of claim 10, wherein the system comprises:
- a first virtual machine configured to host the first sub-module of the security interface;
- a second virtual machine configured to host the second sub-module of the security interface;
- wherein the first and second virtual machines are hosted by different virtual machine hosts and/or are separated from each other via a firewall.

12. The system of claim 10 or 11, wherein the system for process automation comprises a multi-level system architecture, the multi-level system architecture comprising at least:
- a first level comprising the one or more machines and optionally further objects involved in executing actual physical processes, in particular sensing and manipulating physical objects;
- a second level - L2 - comprising components for supervising, monitoring and/or controlling the physical processes of the first level; and
- a third level - L3 - comprising manufacturing operations system components configured for managing production work flow to produce the desired products by supervising, monitoring and/or controlling components of the second level,
- wherein the first sub-module of the security interface is part of the third level and wherein the second sub-module of the security interface is part of the second level and wherein the components of the second level are protected from components of the third and higher levels by at least one security means, in particular firewalls.

13. The system of any one of claims 10-12,
- wherein the second sub-module of the security interface comprises machine-specific functions respectively configured to control the operation of one or more of the machines in accordance with the control parameters in the plant machinery database, wherein the number and type of input arguments and the number and type of output control commands of the one or more machine-specific functions at least partially corresponds to control interfaces of the machines controlled by respective ones of the machine-specific functions;
- wherein the first sub-module of the security interface comprises one or more generic functions, each generic function being assigned to a respective one of the machine-specific functions;
- wherein the receiving of the request by the first sub-module of the interface triggers execution of at least one of the generic functions and, after successful execution of the at least one generic function, triggers execution of the one or more of the machine-specific functions assigned to the executed at least one generic function.

14. The system of claim 13,
- wherein a first part of the request verification is executed by the at least one generic function, and
- wherein a second part of the request verification is performed by one or more of the machine-specific functions assigned to the executed at least one generic function.

15. The system of any one of claims 10-14, wherein the system comprises a function-synchronization module configured to:
- automatically determine that the number or type of input arguments required by one of the machine-specific functions or that the number or type of output arguments provided by the one of the machine-specific functions changed, and
- automatically replicating the change to the one of the generic functions to which the changed machine-specific function is assigned such that the input arguments and the output arguments of the generic function also reflect this change.

16. The system according to any one of the previous claims, wherein the request is generated by a remote client (106, 108, 110) which is connected to the system according to any one of the previous claims via network, wherein the security interface is used as a remote-control access path for the remote client to the automation system and the machines controlled by the automation system, wherein the remote client is selected from a group comprising a remote human user, an edge computer system, a remote client device, in particular a mobile device, or a remote client software.

17. The system according to any one of the previous claims, the system further comprising a visualization engine (134) configured to generate a graphical representation of digital twins of the machines (140) of the plant and/or of products manufactured by the machines.

18. The system of claim 17,
- wherein the request is submitted by a remote human user (108) wearing virtual reality (VR) glasses operatively coupled to the visualization engine, the visualization engine visualizing at least some aspects of a manufacturing process executed by the machines via the VR glasses, and/or
- wherein the visualization engine (134) is configured to create an augmented reality for one or more local users (146) wearing AR glasses and operating within the plant, the augmented reality comprising an avatar of a remote user (108) and/or comprising virtual graphic objects assisting in maintenance or control of one or more of the machines, and
- wherein preferably the visualization engine supports voicemail and/or a chat between the remote human user and the local user (146).

19. The system according to any one of the previous claims, further comprising a plant environment database (130), a visualization engine (134) and a database replication module (150),
- wherein the plant machinery database (128) comprises models, position information and status information of the machines and/or of products produced by the machines, wherein the position information is continuously updated to reflect the real positions and status of the machines and/or products;
- wherein the plant machinery database is configured to prohibit access by the visualization engine;
- wherein the database replication module is configured to continuously replicate only predefined sub-sets of the data of the plant machinery database to the plant environment database, thereby filtering out at least some machine-related data, in particular sensitive machine-related data; and
- wherein a visualization engine is configured to only use data comprised in the plant environment database for generating visual representations of the machines (140) of the plant and/or of products processed by the machines.

20. The system of any one of the previous claims, wherein the security interface is configured for:
- generating an acceptance request, the acceptance request being configured for prompting an entity (146) to accept a requested modification of one or more of the control parameters stored in the plant machinery database, the entity being a human user locally operating at the plant or being a software program;
- providing the acceptance request to the entity;
- in response to receiving a response indicating acceptance by the entity, performing the storing of the control parameters comprised in or derived from the request in the plant machinery database.

21. The system of any one of the previous claims, wherein the machine whose automatic operation is performed in accordance with the stored control parameters comprised in or derived from the valid request is a robot (510), in particular a robot controlled via a visualization engine by a remote user (108).

22. The system of any one of the previous claims, wherein the machine whose automatic operation is performed in accordance with the stored control parameters comprised in or derived from the valid request and/or another machine of the manufacturing plant comprises a local control interface, the local control interface enabling a local operator (146) to access and control the machine via a separate, local communication channel.

23. A method for automating processes of a manufacturing plant, comprising:
- providing (602) a system (100, 200, 300, 500) for process automation of the manufacturing plant, comprising:
∘ a plurality of machines (140, 536) of the manufacturing plant,
∘ a plant machinery database (128, 548) comprising control parameters for the machines;
∘ an automation system (103) for automatically operating the machines of the manufacturing plant in accordance with the control parameters in the plant machinery database;
∘ a security interface (142);
- receiving (604), by the security interface, a request;
- verifying (606), by the security interface, the request,
- in response to determining that the request is valid, storing (608), by the security interface, control parameters (402-408) comprised in or derived from the request in the plant machinery database;
- automatically operating (610), by the automation system, the machines in accordance with the stored control parameters comprised in or derived from the valid request.
